# EUROPEAN PATENT APPLICATION

(11) **EP 4 318 082 A1**
(43) Date of publication of application: **07.02.2024**
(21) Application number: 22779466.6
(22) Date of filing: 28.01.2022
(51) Int. Cl.: G02B 27/02, G09G 3/02, H04N 5/64, H04N 13/344

(54) **IMAGE DISPLAY DEVICE**

(30) Priority: 31.03.2021 JP 2021060378
(71) Applicant: Sony Group Corporation, Tokyo 108-0075 (JP)
(72) Inventor: UEDA Daisuke, Tokyo 108-0075 (JP)
(74) Representative: D Young & Co LLP
(86) International application number: PCT/JP2022/003197
(87) International publication number: WO 2022/209236

(57) **Abstract**

An object of the present invention is to provide an image display device that can cause a user to visually recognize not only an image of a first angle of view (for example, angle of view centered in the line-of-sight direction) but also an image of a second angle of view around the first angle of view even in a case where the referenced user moves the line-of-sight.

An image display device (10) according to the present invention includes an image light generation system (150) that generates image light (il), and a light guide system (350) that, in a case where light that forms a first angle of view of the image light (il) is defined as first angle-of-view light (avl1) and light that forms a second angle of view around the first angle of view of the image light (il) is defined as second angle-of-view light (avl2), guides at least the first angle-of-view light (avl1) of the first and second angle-of-view light (av1, avl2) to an eyeball (1) of a user through a first route (R1) and guides at least the second angle-of-view light (avl2) of the first and second angle-of-view light (av1, avl2) to the eyeball (1) through a second route (R2) .

## Description

### TECHNICAL FIELD

The technology according to the present disclosure (hereinafter also referred to as the "present technology") relates to an image display device.

### BACKGROUND ART

Conventionally, an image display device that guides image light to an eyeball of a user so that an image is visually recognized is known (for example, see Patent Document 1).

### CITATION LIST

### PATENT DOCUMENT

Patent Document 1: Japanese Patent Application Laid-Open No. 2014-228805

### SUMMARY OF THE INVENTION

### PROBLEMS TO BE SOLVED BY THE INVENTION

However, in a conventional image display device, there has been a possibility that, in a case where the user moves the line-of-sight, the user cannot be caused to visually recognize a part of an image of a second angle of view around a first angle of view (for example, view angle centered in the line-of-sight direction).

Therefore, a main object of the present technology is to provide an image display device that can cause the user to visually recognize not only an image of a first angle of view (for example, angle of view centered in the line-of-sight direction) but also an image of a second angle of view around the first angle of view even in a case where the user moves the line-of-sight.

### SOLUTIONS TO PROBLEMS

The present technology provides an image display device including
an image light generation system that generates image light, and
a light guide system that, in a case where light that forms a first angle of view of the image light is defined as first angle-of-view light and light that forms a second angle of view around the first angle of view of the image light is defined as second angle-of-view light, guides at least the first angle-of-view light of the first and second angle-of-view light to an eyeball of a user through a first route and guides at least the second angle-of-view light of the first and second angle-of-view light to the eyeball through a second route.

The light guide system may cause at least the second angle-of-view light guided through the second route to be incident on the eyeball from a plurality of different directions.

The light guide system may cause at least the second angle-of-view light guided through the second route to be incident on the eyeball at an angle of view wider than an angle of view in a case where the referenced second angle-of-view light is generated by the image light generation system.

The light guide system may cause at least the first angle-of-view light guided through the first route to be incident on the eyeball at an angle of view wider than an angle of view in a case where the referenced first angle-of-view light is generated by the image light generation system.

The light guide system may condense at least the first angle-of-view light guided through the first route into the eyeball.

The light guide system may include a branching optical system that causes the image light to branch into first image light and second image light, a first optical system that guides at least the first angle-of-view light of the first and second angle-of-view light included in the first image light to the eyeball through the first route, and a second optical system that guides at least the second angle-of-view light of the first and second angle-of-view light included in the second image light to the eyeball through the second route.

The second optical system may include a relay optical system including a light shielding portion that receives the second image light and shields the first angle-of-view light of the first and second angle-of-view light included in the second image light.

The light shielding portion may be able to give a spatial distribution to a light shielding degree of the first angle-of-view light.

The light shielding portion may be able to shield the first angle-of-view light and cancel shielding in time series.

The light shielding portion may be a mask in which a light shielding position is variable.

The light shielding portion may be a liquid crystal element.

The branching optical system may include a beam splitter.

The beam splitter may be a half mirror.

The second optical system may include a light guide plate that guides the second angle-of-view light through the relay optical system, and a diffractive optical element that diffracts the second angle-of-view light guided by the light guide plate toward the eyeball.

The first optical system may include a relay optical system that receives the first image light and emits at least the first angle-of-view light of the first and second angle-of-view light included in the first image light, and a diffractive optical element that diffracts at least the first angle-of-view light emitted from the relay optical system toward the eyeball.

The diffractive optical element may condense at least the first angle-of-view light on a rotation center of the eyeball.

The relay optical system may include a light shielding portion that shields the second angle-of-view light of the first and second angle-of-view light included in the first image light.

The light shielding portion may be able to give a spatial distribution to a light shielding degree of the second angle-of-view light.

The light shielding portion may be able to shield the second angle-of-view light and cancel shielding in time series.

The light shielding portion may be a mask in which a light shielding position is variable.

The light shielding portion may be a liquid crystal element.

The image light generation system may include a light source, and a deflector that is arranged on an optical path of the image light between the light source and the branching optical system and deflects referenced image light.

The image light generation system may generate the image light with the image light divided into the first angle-of-view light and the second angle-of-view light, and the light guide system may include a first optical system that guides incident light to the eyeball through the first route, a second optical system that guides incident light to the eyeball through the second route, and an incident optical system that causes the first angle-of-view light to be incident on the first optical system and causes the second angle-of-view light to be incident on the second optical system.

The Image light generation system may include a plurality of light sources including first and second light sources, a deflector that deflects and scans incident light, a pre-deflector optical system that causes light from the plurality of light sources to be incident on the deflector through a same incident optical path, and a control system that controls the plurality of light sources and the deflector.

The control system may generate the first angle-of-view light by driving at least the first light source of the plurality of light sources in a case where the deflector performs deflecting and scanning within the first angle of view, and generate the second angle-of-view light by driving at least the second light source of the plurality of light sources in a case where the deflector performs deflecting and scanning within the second angle of view.

Polarization directions of the first and second light sources may be orthogonal to each other, and the incident optical system may include a polarization beam splitter.

The first optical system may include a relay optical system that receives the first angle-of-view light, and a diffractive optical element that diffracts the first angle-of-view light through the relay optical system toward the eyeball.

The second optical system may include a relay optical system that receives the second angle-of-view light, a light guide plate that guides the second angle-of-view light through the relay optical system, and a diffractive optical element that diffracts the second angle-of-view light guided by the light guide plate toward the eyeball.

A line-of-sight detection system that detects a line-of-sight that is a direction of the eyeball may be further included, in which the image light generation system may set a position of the first angle of view and/or a position of the second angle of view on the basis of a detection result of the line-of-sight detection system.

A line-of-sight guidance system that guides a line-of-sight that is a direction of the eyeball may be further included.

The line-of-sight guidance system may cause the image light generation system to display instruction display indicating a position of the first angle of view on an image of the second angle of view formed by the second angle-of-view light.

The line-of-sight guidance system may guide the line-of-sight by causing the light guide system to include the first angle-of-view light in the at least second angle-of-view light guided through the second route.

The line-of-sight guidance system may give an instruction to urge the user to move the line-of-sight into the first angle of view in advance.

The line-of-sight guidance system may cause the image light generation system to move an image of the first angle of view formed by the first angle-of-view light at speed at which tracking by the line-of-sight is possible.

The line-of-sight guidance system may cause the image light generation system to display instruction display indicating a position of the first angle of view on an image of the second angle of view formed by the second angle-of-view light in a case where notification that an image of the first angle of view has been lost is received from the user.

The line-of-sight guidance system may guide the line-of-sight by causing the light guide system to include the first angle-of-view light in the at least second angle-of-view light guided through the second route in a case where notification that an image of the first angle of view has been lost is received from the user.

A pupil diameter estimation system that estimates a pupil diameter of the eyeball may be further included, in which the image light generation system may adjust a size of the first angle of view and/or the second angle of view on the basis of an estimation result of the pupil diameter estimation system.

### BRIEF DESCRIPTION OF DRAWINGS

Fig. 1 is a cross-sectional view illustrating a configuration of an image display device according to a first embodiment of the present technology.
Fig. 2 is a block diagram illustrating functions of the image display device according to the first embodiment of the present technology.
Fig. 3 is a view illustrating a state in which first image light guided through a first route is incident on an eyeball in a case where the line-of-sight is directed in the front direction.
Fig. 4 is a view illustrating a state in which a part of the first image light guided through the first route is incident on an eyeball in a case where the line-of-sight is directed in the left direction.
Fig. 5 is a view illustrating a state in which a part of the first image light guided through the first route is incident on the eyeball in a case where the line-of-sight is directed in the right direction.
Fig. 6 is a view illustrating a state in which a second angle-of-view light guided through a second route is condensed on a plurality of focal points in a case where the line-of-sight is directed in the front direction.
Fig. 7 is a view illustrating a state in which the second angle-of-view light guided through the second route is condensed on the plurality of focal points in a case where the line-of-sight is directed in the left direction.
Fig. 8 is a view illustrating a state in which the second angle-of-view light guided through the second route is condensed on the plurality of focal points in a case where the line-of-sight is directed in the right direction.
Fig. 9 is a flowchart for describing image display processing 1.
Fig. 10 is a cross-sectional view illustrating a configuration of an image display device according to Modification 1 of the first embodiment of the present technology.
Fig. 11 is a block diagram illustrating functions of the image display device according to Modification 1 of the first embodiment of the present technology.
Fig. 12 is a flowchart for describing image display processing 2.
Fig. 13 is a cross-sectional view illustrating a configuration of an image display device according to Modification 2 of the first embodiment of the present technology.
Fig. 14 is a block diagram illustrating functions of the image display device according to Modification 2 of the first embodiment of the present technology.
Fig. 15A is a view illustrating a state in which a part of the first image light guided through the first route is incident on the eyeball in a case where the pupil diameter of the eyeball is small. Fig. 15B is a view illustrating a relationship among first to third angles of view corresponding to the state in Fig. 15A.
Fig. 16A is a view illustrating a state in which a part of the first image light guided through the first route is incident on the eyeball in a case where the pupil diameter of the eyeball is large. Fig. 16B is a view illustrating a relationship among the first to third angles of view corresponding to the state in Fig. 16A.
Fig. 17 is a flowchart for describing image display processing 3.
Fig. 18 is a block diagram illustrating functions of an image display device according to Modification 3 of the first embodiment of the present technology.
Fig. 19 is a flowchart for describing image display processing 4.
Figs. 20A and 20B are diagrams for describing line-of-sight guidance in the image display processing 4.
Fig. 21 is a block diagram illustrating functions of an image display device according to Modification 4 of the first embodiment of the present technology.
Fig. 22 is a flowchart for describing image display processing 5.
Figs. 23A and 23B are diagrams for describing line-of-sight guidance in the image display processing 5.
Fig. 24 is a block diagram illustrating functions of an image display device according to Modification 5 of the first embodiment of the present technology.
Fig. 25 is a flowchart for describing image display processing 6.
Figs. 26A and 26B are diagrams for describing line-of-sight guidance in the image display processing 6.
Fig. 27 is a cross-sectional view illustrating a configuration of an image display device according to a second embodiment of the present technology.
Fig. 28 is a block diagram illustrating functions of the image display device according to the second embodiment of the present technology.
Fig. 29 is a flowchart for describing image display processing 9.

### MODE FOR CARRYING OUT THE INVENTION

Hereinafter, preferred embodiments of the present technology will be described in detail with reference to the accompanying drawings. Note that in the description and the drawings, components having substantially the same functional configuration are denoted by the same reference numerals, and redundant descriptions are omitted. The embodiments described below illustrate representative embodiments of the present technology, and the scope of the present technology is not narrowly interpreted by these embodiments. In the description, even in a case where it is described that an image display device according to the present technology exhibits a plurality of effects, an image display device according to the present technology is only required to exhibit at least one effect. The effects described herein are merely examples and the present invention is not limited thereto, and other effects may be provided.

Furthermore, description will be given in the following order.
1. Introduction
2. Image Display Device According to First Embodiment of Present Technology
3. Image Display Device According to Modification 1 of First Embodiment of Present Technology
4. Image Display Device According to Modification 2 of First Embodiment of Present Technology
5. Image Display Device According to Modification 3 of First Embodiment of Present Technology
6. Image Display Device According to Modification 4 of First Embodiment of Present Technology
7. Image Display Device According to Modification 5 of First Embodiment of Present Technology
8. Image Display Device According to Modification 6 of First Embodiment of Present Technology
9. Image Display Device According to Modification 7 of First Embodiment of Present Technology
10. Image Display Device According to Modification 8 of First Embodiment of Present Technology
11. Image Display Device According to Second Embodiment of Present Technology
12. Modifications of Present Technology

### <1. Introduction>

Conventionally, in a retinal direct drawing type image display device, since image light is condensed at a predetermined angle of view on an eyeball of the user who is an observer, light that forms a part of the angle of view of the image light is blocked off by an iris in a case where a line-of-sight direction of the referenced user changes (in a case where the eyeball rotates), and the user could not be caused to visually recognize an image of the referenced angle of view.

Therefore, the inventor has developed an image display device according to the present technology as an image display device capable of causing visual recognition of an image of the referenced angle of view (capable of causing visual recognition of an image of the entire angle of view) even in a case where the user moves the line-of-sight.

### <2. Image Display Device According to First Embodiment of Present Technology>

An image display device 10 according to a first embodiment of the present technology will be described with reference to the drawings.

The image display device 10 is used for providing a user with augmented reality (AR), virtual reality (VR), or the like, for example.

Hereinafter, for convenience, in each of the drawings, description will be given on the assumption that a left side of a paper surface is left, a right side of the paper surface is right, a near side of the paper surface is top, and a far side of the paper surface is bottom.

### [Configuration of Image Display Device]

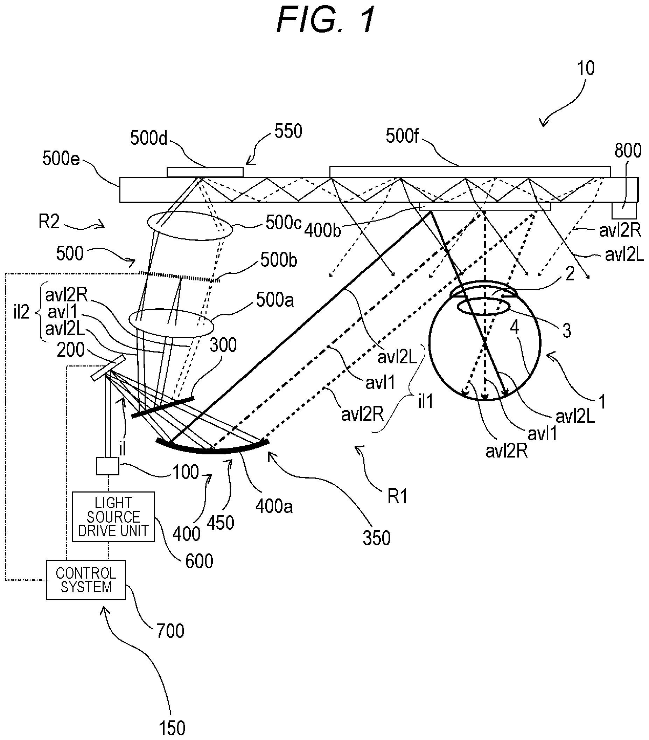

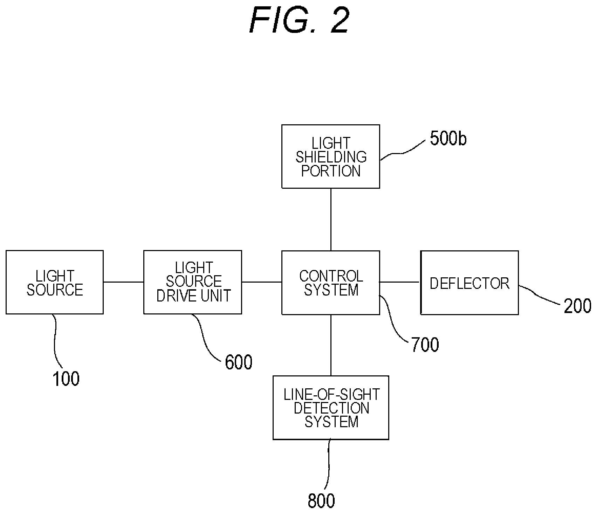

Fig. 1 is a cross-sectional view illustrating a configuration of the image display device 10 according to the first embodiment. Fig. 2 is a block diagram illustrating functions of the image display device 10 according to the first embodiment.
--The image display device 10 functions as, for example, a head mounted display (HMD) used by being worn on the head of the user. The HMD is also called eyewear, for example.

As illustrated in Fig. 1, image display device 10 includes an image light generation system 150 and a light guide system 350.

As also illustrated in Fig. 2, the image display device 10 may include a control system 700 and a line-of-sight detection system 800.

As an example, the image light generation system 150, the light guide system 350, and the line-of-sight detection system 800 are integrally provided in the same support structure (for example, spectacle frame).

The control system 700 may be provided integrally with the support structure or may be provided separately.

Hereinafter, the description will be given on the premise that a spectacle frame as an example of the support structure is mounted on the head of the user.

### [Image Light Generation System]

The image light generation system 150 generates image light il.

As an example, the image light generation system 150 includes a light source 100, a deflector 200, and a light source drive unit 600.

The light source 100 is preferably a laser light source. Examples of the laser light source include a semiconductor laser such as an edge emitting laser (EEL), a surface emitting laser (SEL), or the like.

The light source 100 is driven by the light source drive unit 600 (for example, laser driver) (see Fig. 2). The light source drive unit 600 drives the light source 100 on the basis of modulation data to be described below transmitted from the control system 700 (see Fig. 2). That is, the control system 700 controls the light source 100 via the light source drive unit 600.

The deflector 200 includes a movable mirror movable about two axes orthogonal to each other (for example, one axis perpendicular to the paper surface of Fig. 1 and another axis orthogonal to the referenced one axis), such as a micro-electro-mechanical system (MEMS) mirror, a galvanometer mirror, a polygon mirror, or the like. Note that the deflector 200 may include a first movable mirror movable about one axis and a second movable mirror movable about another axis orthogonal to the referenced one axis.

The deflector 200 is controlled by the control system 700 (see Fig. 2). The control system 700 controls the deflector 200 in synchronization with the control of the light source 100.

In the image light generation system 150, light from the light source 100 driven according to modulation data is deflected by the deflector 200, and image light il is generated.

### [Light Guide System]

In a case where light that forms a first angle of view of the image light il is defined as first angle-of-view light avl1 and light that forms a second angle of view around the first angle of view of the image light il is defined as second angle-of-view light avl2, the light guide system 350 guides at least the first angle-of-view light avl1 of the first and second angle-of-view light avl1, avl2 to an eyeball 1 of the user through a first route R1 and guides at least the second angle-of-view light avl2 of the first and second angle-of-view light avl1, avl2 to the eyeball 1 through a second route R2.

Here, the first angle of view is, for example, an angle of view centered in the line-of-sight direction of the user. For example, in a case where the line-of-sight of the user is directed to the front, the first angle of view corresponds to the central angle of view of the image light il (see Fig. 1).

As an example, the light guide system 350 includes a branching optical system 300, a first optical system 400, and a second optical system 500.

### (Branching Optical System)

The branching optical system 300 is arranged on an optical path of the image light il from the image light generation system 150 (specifically, deflector 200).

The branching optical system 300 causes the image light il to branch into first image light il1 and second image light 112.

The branching optical system 300 includes, for example, a beam splitter. The beam splitter is, for example, a half mirror.

Here, as an example, the first image light il1 that is a part of the image light il incident on the branching optical system 300 is transmitted through the branching optical system 300, and the second image light 112 that is the other part is reflected by the branching optical system 300.

Note that a layout can be also adopted in which the first image light il1 that is a part of the image light il incident on the branching optical system 300 is reflected by the branching optical system 300, and the second image light 112 that is the other part is transmitted through the branching optical system 300.

### (First Optical System)

The first optical system 400 guides at least first angle-of-view light avl1 of the first and second angle-of-view light avl1, avl2 included in the first image light il1 to the eyeball 1.

The first optical system 400 includes a relay optical system 450 including a concave mirror 400a that receives the first image light il1 and emits the first and second angle-of-view light avl1, avl2 included in the first image light il1, and a diffractive optical element 400b that diffracts the first and second angle-of-view light avl1, avl2 emitted from the referenced relay optical system 450 toward the eyeball 1. Note that the relay optical system 450 may include a lens, a plane mirror, or the like instead of or in addition to the concave mirror 400a.

The concave mirror 400a is arranged on an optical path of the first image light il1 from the branching optical system 300.

As an example, the diffractive optical element 400b is a reflective diffractive optical element, and is arranged on an optical path of the first image light il1 from the concave mirror 400a.

In the first optical system 400, the first angle-of-view light avl1 and second angle-of-view light avl2L, avl2R included in the first image light il1 from the branching optical system 300 are reflected by the concave mirror 400a and diffracted toward the eyeball 1 by the diffractive optical element 400b. At least the first angle-of-view light avl1 of the first angle-of-view light avl1 and the second angle-of-view light avl2L, avl2R diffracted toward the eyeball 1 by the diffractive optical element 400b is incident on a pupil 2 of the eyeball 1 and reaches a retina 4 through a crystalline lens 3.

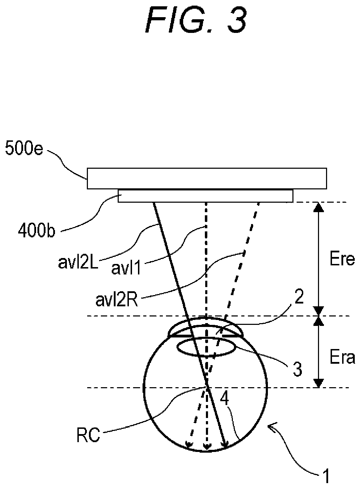

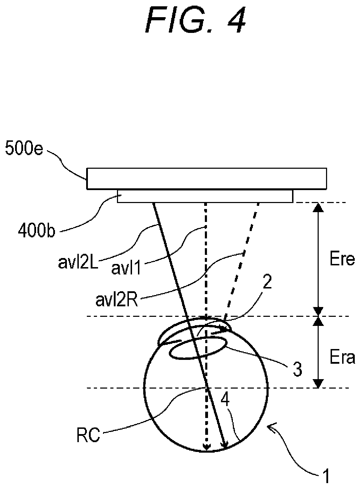

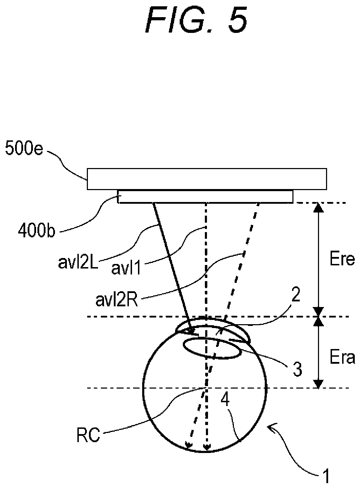

Here, the diffractive optical element 400b preferably condenses the incident first angle-of-view light avl1 and second angle-of-view light avl2L, avl2R on the inside of the eyeball 1, for example, a rotation center RC of the eyeball 1 (see Figs. 3 to 5). In this case, even if the line-of-sight direction of the user changes (even if the eyeball 1 rotates), at least the first angle-of-view light avl1 can be caused to be incident on the pupil 2, and the referenced user can be caused to visually recognize at least an image of the first angle of view. Note that, in Figs. 3 to 5, "Ere" is an eye relief, and "Era" is an eyeball radius.

Note that by the focal length of the diffractive optical element 400b being adjusted and an optical component being arranged at an appropriate position, at least the first angle-of-view light avl1 guided through the first route R1 (for example, first angle-of-view light avl1, second angle-of-view light avl2L, avl2R) can be caused to be incident on the eyeball 1 at an angle of view wider than an angle of view in a case where the referenced at least first angle-of-view light avl1 is generated by the image light generation system 150 (the angle of view is a deflection angle of the deflector 200) .

### (Second Optical System)

The second optical system 500 guides at least the second angle-of-view light avl2 of the first and second angle-of-view light avl1, avl2 included in the second image light 112 to the eyeball 1.

As an example, the second optical system 500 includes a relay optical system 550 including a lens 500a, a light shielding portion 500b, a lens 500c, and a diffractive optical element 500d. Note that the relay optical system 550 can be changed as appropriate, and may include, for example, a mirror, a lens, a prism, or the like instead of the diffractive optical element 500d.

The second optical system 500 further includes a light guide plate 500e and a diffractive optical element 500f sequentially arranged at a subsequent stage of the referenced relay optical system 550. The light guide plate 500e is arranged to face the eyeball 1 and the image light generation system 150. In other words, the image light generation system 150 is arranged on the eyeball 1 side of the light guide plate 500e. Here, the uniaxial pupil enlargement (pupil enlargement in the cross section of Fig. 1) using the diffractive optical element 500f will be described, however, for example, similar discussion holds in a case where a diffractive optical element is added to the light guide plate 500e and biaxial pupil enlargement (pupil enlargement in the cross section of Fig. 1 and in the cross section orthogonal to the referenced cross section) is performed.

The lens 500a is arranged on an optical path of the second image light 112 from the branching optical system 300, and light for each pixel of the referenced second image light il2 is caused to be incident.

The lens 500a condenses the first angle-of-view light avl1 and the second angle-of-view light avl2L, avl2R included in the incident second image light il2 on the light shielding portion 500b for each pixel. Here, the second angle-of-view light avl2L is light on the left side of the second angle-of-view light avl2. The second angle-of-view light avl2R is light on the right side of the second angle-of-view light avl2.

The second image light il2 is caused to be incident through the lens 500a, and the light shielding portion 500b shields the first angle-of-view light avl1 of the first and second angle-of-view light avl1, avl2 included in the referenced second image light 112.

As an example, the light shielding portion 500b includes any of a light shielding mask (for example, light shielding shutter), a liquid crystal element (for example, liquid crystal panel), and a digital mirror device (DMD) capable of shielding the incident second image light il2 for each pixel or each pixel block including a plurality of pixels. The light shielding portion 500b is controlled by the control system 700 (see Fig. 2). More specifically, the light shielding portion 500b is controlled by the control system 700 such that the first angle-of-view light avl1 of the incident second image light il2 is shielded and the second angle-of-view light avl2 is caused to pass.

Preferably, the light shielding portion 500b can give a spatial distribution to the light shielding degree of the first angle-of-view light avl1.

Preferably, the light shielding portion 500b can shield the first angle-of-view light avl1 and cancel the shielding in time series.

As an example, the lens 500c is arranged on optical paths of the second angle-of-view light avl2L, avl2R that has passed through the light shielding portion 500b, converts the referenced second angle-of-view light avl2L, avl2R into substantially parallel light for each pixel, and emits the substantially parallel light in directions gradually approaching each other in the central axis direction.

As an example, the diffractive optical element 500d is arranged on the optical paths of the second angle-of-view light avl2L, avl2R transmitted through the lens 500c and the light guide plate 500e on a surface of the light guide plate 500e on the side opposite to the eyeball 1 side. As an example, the diffractive optical element 500d is a reflective diffractive optical element. Note that the diffractive optical element 500d may be arranged on the optical paths of the second angle-of-view light avl2L, avl2R transmitted through the lens 500c on a surface of the light guide plate 500e on the eyeball 1 side. In this case, a transmission diffractive optical element can be used as the diffractive optical element 500d.

The diffractive optical element 500d causes the second angle-of-view light avl2L, avl2R to be incident on the surface of the light guide plate 500e on the eyeball 1 side at an incident angle at which the second angle-of-view light avl2L, avl2R is reflected and diffracted and totally reflected in the referenced light guide plate 500e by the referenced light guide plate 500e (the angle is a critical angle).

Here, as an example, the diffractive optical element 500d diffracts the second angle-of-view light avl2L, avl2R incident on substantially the same position at different incident angles such that the second angle-of-view light avl2L, avl2R is caused to be incident on the surface of the light guide plate 500e on the eyeball 1 side at different incident angles.

The light guide plate 500e is, for example, a transparent, translucent, or opaque glass plate. The light guide plate 500e may be a type (spectacle lens type) fitted into a spectacle frame as the support structure described above, or may be a type (combiner type) externally attached to the referenced spectacle frame.

A transparent or translucent glass plate is used for the light guide plate 500e, for example, in a case where augmented reality (AR) is provided to the user.

An opaque glass plate is used for the light guide plate 500e, for example, in a case where virtual reality (VR) is provided to the user.

As an example, the thickness of the light guide plate 500e is preferably 1 mm to 5 mm. Here, the thickness of the light guide plate 500e is set to 1 mm, for example.

The second angle-of-view light avl2L, avl2R caused to be incident on the light guide plate 500e is propagated in the light guide plate 500e while being totally reflected from the left side to the right side.

As an example, the diffractive optical element 500f is provided on the surface of the light guide plate 500e on the side opposite to the eyeball 1 side. As an example, the diffractive optical element 500f is a reflective diffractive optical element.

The diffractive optical element 500f sequentially reflects and diffracts a part of the second angle-of-view light avl2L propagated in the light guide plate 500e while being totally reflected, and causes the part of the second angle-of-view light avl2L to be incident on the eyeball 1 from a plurality of different directions.

For example, the diffractive optical element 500f sequentially reflects and diffracts the part of the second angle-of-view light avl2L and condenses the part of the second angle-of-view light avl2L on a plurality of (for example, three) focal points FP1 to FP3 (plurality of positions in the eyeball 1 or in the vicinity of the eyeball 1).

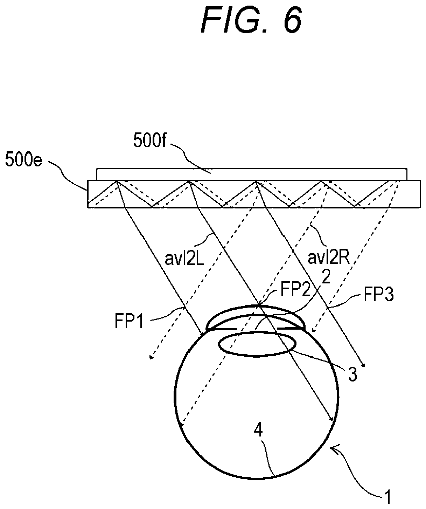

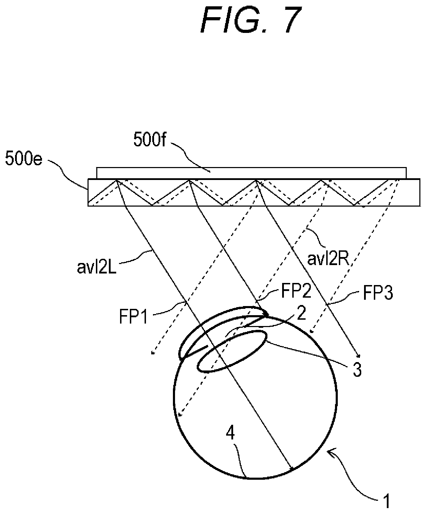

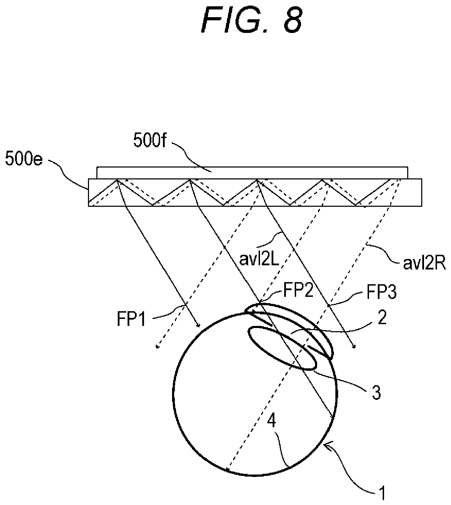

Since the diffractive optical element 500f causes each of the second angle-of-view light avl2L, avl2R to be incident on the eyeball 1 from a plurality of different directions, even if the line-of-sight direction of the user changes (even if the eyeball 1 rotates), the second angle-of-view light avl2L, avl2R can be caused to be incident on the pupil 2 (see Figs. 6 to 8), and the user can be caused to visually recognize an image of the second angle of view. The more the number of focal points is increased, the more reliably the user can be caused to visually recognize the image of the second angle of view.

Note that by the optical magnification being adjusted in the relay optical system 550, at least each of the second angle-of-view light avl2L, avl2R guided through the second route R2 can be caused to be incident on the light guide plate 500e at an angle of view wider than the angle of view in a case where each of the second angle-of-view light avl2L, avl2R is generated by the image light generation system 150 (the angle is a deflection angle of the deflector 200), and further, can be caused to be incident on the eyeball 1 at the referenced wider angle of view.

For example, each of the diffractive optical elements described above may be formed by processing the surface of the light guide plate 500e, or may be attached to the surface of the light guide plate 500e. Here, in a broad sense, the diffractive optical elements described above include a holographic optical element (HOE) in addition to a diffractive optical element (DOE).

### (Control System)

The control system 700 includes a main control unit that integrally controls the entire image display device 10. The control system 700 is implemented by, for example, hardware such as a CPU, a chip set, and the like.

The control system 700 generates modulation data on the basis of image data input from an external device or input via a network, and transmits the modulation data to the light source drive unit 600.

### (Line-of-Sight Detection System)

As an example, the line-of-sight detection system 800 is provided on the surface of the light guide plate 500e on the eyeball 1 side (see Fig. 1). Note that the line-of-sight detection system 800 may be provided in a spectacle frame as the support structure described above.

The line-of-sight detection system 800 detects a line-of-sight that is the direction of the eyeball 1 of the user, and outputs a detection result to the control system 700 (see Fig. 2).

As an example, the line-of-sight detection system 800 includes a light reception/emission unit and a signal processing unit that processes an output signal of the light reception/emission unit.

The light reception/emission unit includes a light emitting element that irradiates the eyeball 1 with invisible light (for example, infrared light) and a light receiving element) that receives light emitted from the referenced light emitting element and reflected by the eyeball 1.

As the light receiving element, for example, a photodiode, a divided photodiode including a plurality of light receiving areas, an image sensor, an event-type sensor (sensor for eye sensing), or the like can be used.

The signal processing unit processes an output signal of the light receiving element described above and calculates the direction of the line-of-sight.

### [Image Display Processing 1]

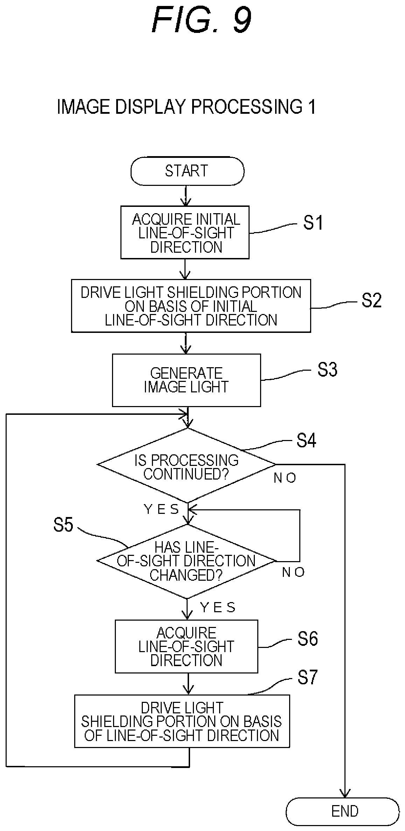

Hereinafter, image display processing 1 performed using the image display device 10 of the first embodiment will be described with reference to a flowchart of Fig. 9. As an example, the image display processing 1 is started in a case where a power switch of the image display device 10 is turned on.

In first step S1, the control system 700 acquires an initial line-of-sight direction. Specifically, the control system 700 acquires the initial line-of-sight direction of the user from the line-of-sight detection system 800.

In next step S2, the control system 700 drives the light shielding portion 500b on the basis of the initial line-of-sight direction. Specifically, the control system 700 controls the light shielding portion 500b such that first angle-of-view light avl1 that forms a first angle of view centered in the initial line-of-sight direction of second image light il2 caused to be incident on the light shielding portion 500b is shielded and second angle-of-view light avl2 that forms a second angle of view that is an angle of view around the first angle of view is caused to pass.

In next step S3, image light il is generated. Specifically, the control system 700 synchronously controls the light source 100 and the deflector 200, deflects and scans light emitted from the light source 100 by the deflector 200, and generates the image light il. As a result, at least the first angle-of-view light avl1 guided through the first route R1 and the second angle-of-view light avl2 guided through the second route R2 reach the retina 4 through the pupil 2 and the crystalline lens 3 of the user. With this arrangement, the user can visually recognize an image of the first angle of view and an image of the second angle of view integrally.

In next step S4, the control system 700 determines whether or not to continue the processing. Specifically, as an example, the control system 700 determines to continue the processing in a case where the power switch of the image display device 10 remains on, and determines not to continue the processing in a case where the referenced power switch is turned off. In a case where the determination in step S4 is positive, the processing proceeds to step S5, and in a case where the determination is negative, the flow ends.

In step S5, the control system 700 determines whether or not the line-of-sight direction of the user has changed. Specifically, the control system 700 determines whether there is a change in the line-of-sight direction of the user by monitoring output (detection result) of the line-of-sight detection system 800. In a case where the determination in step S5 is positive, the processing proceeds to step S6, and in a case where the determination is negative, the same determination is performed again (that is, the standby state is set).

In step S6, the control system 700 acquires the line-of-sight direction of the user. Specifically, the control system 700 acquires the line-of-sight direction after the change from the line-of-sight detection system 800.

In final step S7, the control system 700 drives the light shielding portion 500b on the basis of the line-of-sight direction. Specifically, the control system 700 controls the light shielding portion 500b such that first angle-of-view light avl1 that forms a first angle of view centered in the line-of-sight direction after the change of second image light il2 caused to be incident on the light shielding portion 500b is shielded and second angle-of-view light avl2 that forms a second angle of view around the referenced first angle of view is caused to pass. As a result, at least the first angle-of-view light avl1 guided through the first route R1 and the second angle-of-view light avl2 guided through the second route R2 reach the retina 4 through the pupil 2 and the crystalline lens 3 of the user. With this arrangement, the user can be caused to visually recognize an image of the first angle of view and an image of the second angle of view integrally.

### [Effects of Image Display Device]

The image display device 10 of the first embodiment includes the image light generation system 150 that generates image light il, and the light guide system 350 that, in a case where light that forms a first angle of view (for example, angle of view centered in the line-of-sight direction) of the image light il is defined as first angle-of-view light avl1 and light that forms a second angle of view around the first angle of view of the image light il is defined as second angle-of-view light avl2, guides at least the first angle-of-view light avl1 of the first and second angle-of-view light avl1, avl2 to the eyeball 1 of the user through the first route R1 and guides at least the second angle-of-view light avl2 of the first and second angle-of-view light avl1, avl2 to the eyeball 1 through the second route R2.

In the image display device 10, since the first and second angle-of-view light avl1, avl2 is guided to the eyeball 1 through different routes, the first angle-of-view light avl1 can be caused to be incident on the pupil 2 of the eyeball 1, and the second angle-of-view light avl2 can be caused to be incident on the pupil 2 of the eyeball 1.

As a result, according to the image display device 10, the image display device that can cause the user to visually recognize not only an image of a first angle of view but also an image of a second angle of view around the first angle of view even in a case where the referenced user moves the line-of-sight can be provided.

On the other hand, in a case where the first and second angle-of-view light avl1, avl2 is guided to the eyeball 1 through the same route, even if the first angle-of-view light avl1 can be caused to be incident on the pupil 2 in a case where the user moves the line-of-sight, a part of the second angle-of-view light avl2 cannot be caused to be incident on the pupil 2 (see Figs. 3 to 5), and the user cannot be caused to visually recognize the part of the image of the second angle of view.

The light guide system 350 can cause at least the second angle-of-view light avl2 guided through the second route R2 to be branched and incident on the eyeball 1 from a plurality of different directions. With this arrangement, the second angle-of-view light avl2 can be more reliably incident on the pupil 2, and the user can be caused to more reliably visually recognize the image of the second angle of view.

The light guide system 350 can cause at least the second angle-of-view light avl2 guided through the second route R2 to be incident on the eyeball 1 at an angle of view wider than an angle of view in a case where the referenced second angle-of-view light avl2 is generated by the image light generation system 150. With this arrangement, the second angle-of-view light avl2 can be caused to be even more reliably incident on the pupil 2, and the user can be caused to even more reliably visually recognize the image of the second angle of view.

The light guide system 350 can condense at least the first angle-of-view light avl1 guided through the first route R1 into the eyeball 1. With this arrangement, the first angle-of-view light avl1 can be caused to be more reliably incident on the pupil 2 even if the user moves the line-of-sight.

The light guide system 350 includes the branching optical system 300 that causes image light il to branch into first image light il1 and second image light 112, the first optical system 400 that guides at least first angle-of-view light avl1 of first and second angle-of-view light avl1, avl2 included in the first image light il1 to the eyeball 1, and the second optical system 500 that guides at least second angle-of-view light avl2 of first and second angle-of-view light avl1, avl2 included in the second image light il2 to the eyeball 1. With this arrangement, the first and second angle-of-view light avl1, avl2 can be guided to the eyeball 1 through different routes using the single image light generation system 150. As a result, downsizing and low power consumption can be achieved.

The second optical system 500 includes the relay optical system 550 including the light shielding portion 500b that receives the second image light il2 and shields the first angle-of-view light avl1 of the first and second angle-of-view light avl1, avl2 included in the second image light 112. With this arrangement, the first angle-of-view light avl1 does not overlap each other on the eyeball 1 of the user.

The light shielding portion 500b can give a spatial distribution to the light shielding degree of the first angle-of-view light avl1. With this arrangement, for example, the boundary between the first and second angle-of-view light avl1, avl2 guided to the eyeball 1 of the user through different routes can be blurred by the light shielding degree of the edge portion of the first angle-of-view light avl1 shielded by the second route R2 being lowered, and the user can be caused to visually recognize an image including the image of the first angle of view and the image of the second angle of view as a more natural one image.

The light shielding portion 500b can shield the first angle-of-view light avl1 and cancel the shielding in time series.

The light shielding portion 500b can be a mask in which a light shielding position is variable. The light shielding portion can be a liquid crystal element.

The branching optical system 300 can be a beam splitter. The beam splitter can be a half mirror.

The second optical system 500 includes the light guide plate 500e that guides the second angle-of-view light avl2 through the relay optical system 550 including the light shielding portion 500b, and a diffractive optical element 500f that diffracts the second angle-of-view light avl2 guided through the referenced light guide plate 500e toward the eyeball 1. With this arrangement, the second angle-of-view light avl2 propagated in the light guide plate 500e can sequentially branch and be condensed on each of a plurality of focal points in the vicinity of the eyeball 1.

The first optical system 400 can include the relay optical system 450 including the concave mirror 400a that receives the first image light il1 and emits at least the first angle-of-view light avl1 of the first and second angle-of-view light avl1, avl2 included in the first image light il1, and the diffractive optical element 400b that diffracts at least the first angle-of-view light avl1 emitted from the referenced relay optical system 450 toward the eyeball 1. With this arrangement, the user can be caused to reliably visually recognize the first angle-of-view light avl1.

The diffractive optical element 400b condenses at least the first angle-of-view light avl1 on a rotation center of the eyeball 1. With this arrangement, the first angle-of-view light avl1 can be caused to be incident on the pupil 2 of the eyeball 1 regardless of the direction of the line-of-sight of the user.

The image light generation system 150 can include the light source 100, and the deflector 200 that is arranged on an optical path of the image light il between the referenced light source 100 and the branching optical system 300 and deflects the referenced image light il.

The image display device 10 can further include the line-of-sight detection system 800 that detects a line-of-sight that is a direction of the eyeball 1, in which the image light generation system 150 can set a position of the first angle of view and/or a position of the second angle of view on the basis of a detection result of the line-of-sight detection system 800. With this arrangement, the user can be caused to more reliably visually recognize an image of the first angle of view and an image of the second angle of view.

### <3. Image Display Device According to Modification 1 of First Embodiment of Present Technology>

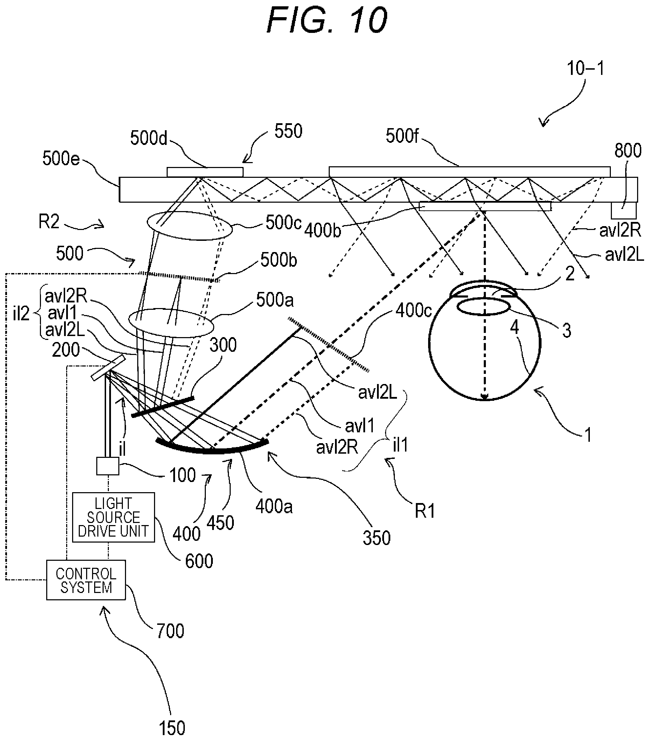

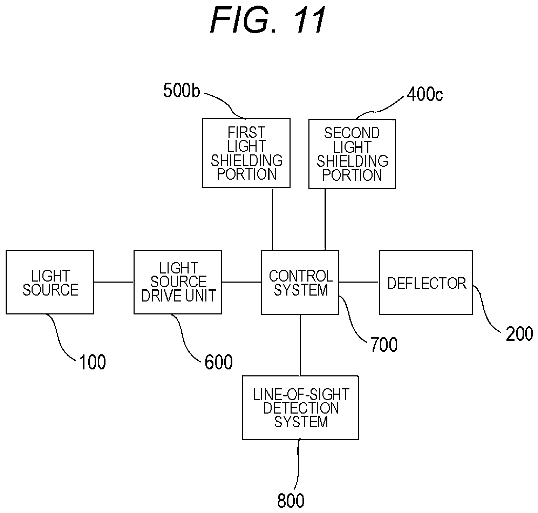

Hereinafter, an image display device 10-1 according to Modification 1 of the first embodiment of the present technology will be described with reference to Figs. 10 and 11.

### [Configuration of Image Display Device]

The image display device 10-1 has a configuration substantially similar to that of the image display device 10 of the first embodiment except that the first optical system 400 includes a light shielding portion 400c between the concave mirror 400a and the diffractive optical element 400b as illustrated in Fig. 10.

Hereinafter, the light shielding portion 500b is also referred to as a "first light shielding portion 500b", and the light shielding portion 400c is also referred to as a "second light shielding portion 400c".

More specifically, in the image display device 10-1, the relay optical system 450 including the concave mirror 400a includes the second light shielding portion 400c that shields second angle-of-view light avl2 of first and second angle-of-view light avl1, avl2 included in first image light il1.

The second light shielding portion 400c has a configuration and function substantially similar to those of the first light shielding portion 500b. As illustrated in Fig. 11, the first and second light shielding portions 500b and 400c are controlled by the control system 700.

Specifically, the control system 700 controls the second light shielding portion 400c such that the second angle-of-view light avl2 of the first image light il1 caused to be incident on the second light shielding portion 400c is shielded and the first angle-of-view light avl1 is caused to pass.

Preferably, the second light shielding portion 400c can give a spatial distribution to the light shielding degree of the second angle-of-view light avl2.

Preferably, the second light shielding portion 400c can shield the second angle-of-view light avl2 and cancel the shielding in time series.

### [Image Display Processing 2]

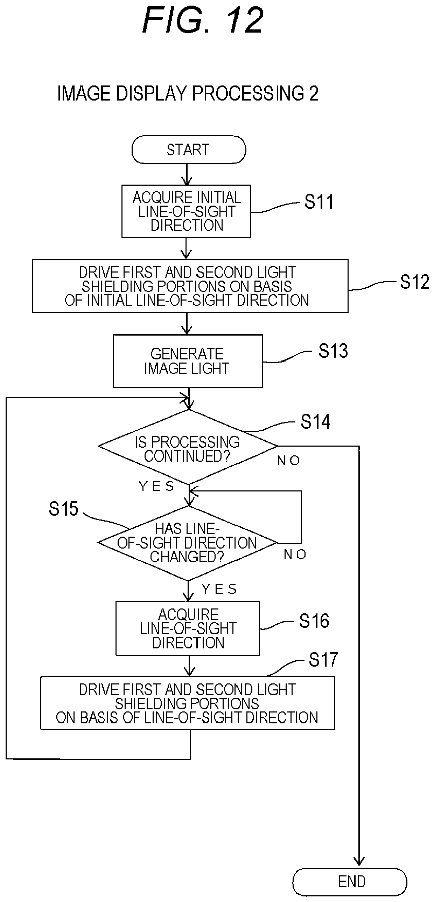

Hereinafter, image display processing 2 performed using the image display device 10-1 will be described with reference to a flowchart of Fig. 12. As an example, the image display processing 2 is started in a case where a power switch of the image display device 10-1 is turned on.

In first step S11, the control system 700 acquires an initial line-of-sight direction. Specifically, the control system 700 acquires the initial line-of-sight direction of the user from the line-of-sight detection system 800.

In next step S12, the control system 700 drives the first and second light shielding portions 500b, 400c on the basis of the initial line-of-sight direction.

Specifically, the control system 700 controls the first light shielding portion 500b such that first angle-of-view light avl1 that forms a first angle of view centered in the initial line-of-sight direction of second image light il2 caused to be incident on the light shielding portion 500b is shielded and second angle-of-view light avl2 that forms a second angle of view that is an angle of view around the referenced first angle of view is caused to pass.

The control system 700 controls the second light shielding portion 400c such that first angle-of-view light avl1 that forms a first angle of view centered in the initial line-of-sight direction of first image light il1 caused to be incident on the second light shielding portion 400c is caused to pass and second angle-of-view light avl2 that forms a second angle of view that is an angle of view around the referenced first angle of view is shielded.

In next step S13, image light il is generated. Specifically, the control system 700 synchronously controls the light source 100 and the deflector 200, deflects and scans light emitted from the light source 100 by the deflector 200, and generates the image light il. As a result, the first angle-of-view light avl1 guided through the first route R1 and the second angle-of-view light avl2 guided through the second route R2 reach the retina 4 through the pupil 2 and the crystalline lens 3 of the user. With this arrangement, the user can visually recognize an image of the first angle of view and an image of the second angle of view integrally.

In next step S14, the control system 700 determines whether or not to continue the processing. Specifically, as an example, the control system 700 determines to continue the processing in a case where the power switch of the image display device 10-1 remains on, and determines not to continue the processing in a case where the referenced power switch is turned off. In a case where the determination in step S14 is positive, the processing proceeds to step S15, and in a case where the determination is negative, the flow ends.

In step S15, the control system 700 determines whether or not the line-of-sight direction of the user has changed. Specifically, the control system 700 determines whether there is a change in the line-of-sight direction of the user by monitoring output (detection result) of the line-of-sight detection system 800. In a case where the determination in step S15 is positive, the processing proceeds to step S16, and in a case where the determination is negative, the same determination is performed again (that is, the standby state is set).

In step S16, the control system 700 acquires the line-of-sight direction of the user. Specifically, the control system 700 acquires the line-of-sight direction after the change from the line-of-sight detection system 800.

In final step S17, the control system 700 drives the first and second light shielding portions 500b, 400c on the basis of the line-of-sight direction.

Specifically, the control system 700 controls the first light shielding portion 500b such that first angle-of-view light avl1 that forms a first angle of view centered in the line-of-sight direction after the change of second image light il2 caused to be incident on the first light shielding portion 500b is shielded and second angle-of-view light avl2 that forms a second angle of view around referenced the first angle of view is caused to pass.

The control system 700 controls the second light shielding portion 400c such that first angle-of-view light avl1 that forms a first angle of view centered in the line-of-sight direction after the change of first image light il1 caused to be incident on the second light shielding portion 400c is caused to pass and second angle-of-view light avl2 that forms a second angle of view around the referenced first angle of view is shielded.

As a result, the first angle-of-view light avl1 guided through the first route R1 and the second angle-of-view light avl2 guided through the second route R2 reach the retina 4 through the pupil 2 and the crystalline lens 3 of the user. With this arrangement, the user can be caused to visually recognize an image of the first angle of view and an image of the second angle of view integrally.

### [Effects of Image Display Device]

According to the image display device 10-1 according to Modification 1 of the first embodiment, the effects similar to those of the image display device 10 of the first embodiment are obtained.

Furthermore, according to the image display device 10-1, since the second light shielding portion 400c shields the second angle-of-view light avl2, irradiation of unnecessary light around the pupil 2 of the eyeball 1 of the user (for example, iris or the like) can be eliminated. With this arrangement, an uncomfortable state in which the vicinity of the eyeball 1 of the user is continuously irradiated with light and brightened as viewed from a person other than the user is reduced.

Furthermore, according to the image display device 10-1, since the second angle-of-view light avl2 is shielded by the second light shielding portion 400c, unnecessary stray light (so-called rainbow diffraction) that may be generated by irradiating the diffractive optical element 500f of the second optical system 500 with the second angle-of-view light avl2 can be reduced.

### <4. Image Display Device According to Modification 2 of First Embodiment of Present Technology>

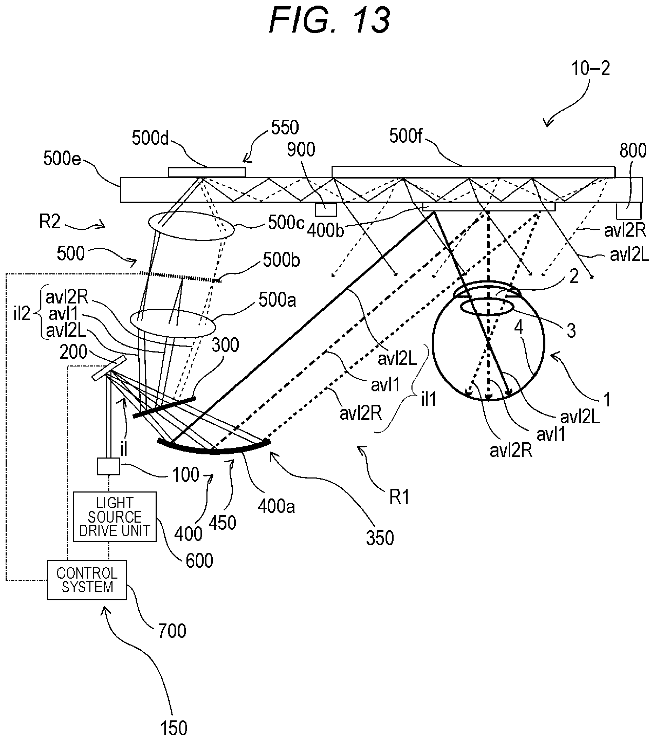

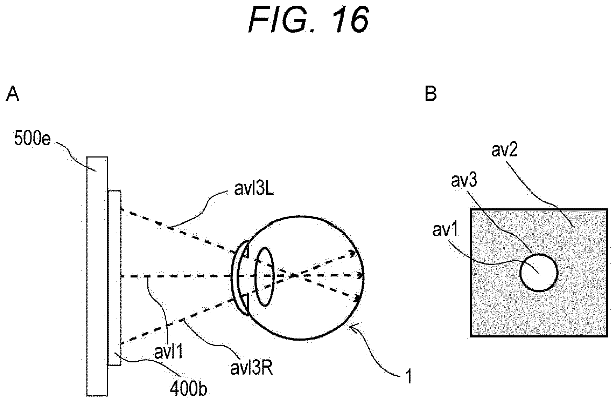

Hereinafter, an image display device 10-2 according to Modification 2 of the first embodiment of the present technology will be described with reference to Figs. 13 and 16.

### [Configuration of Image Display Device]

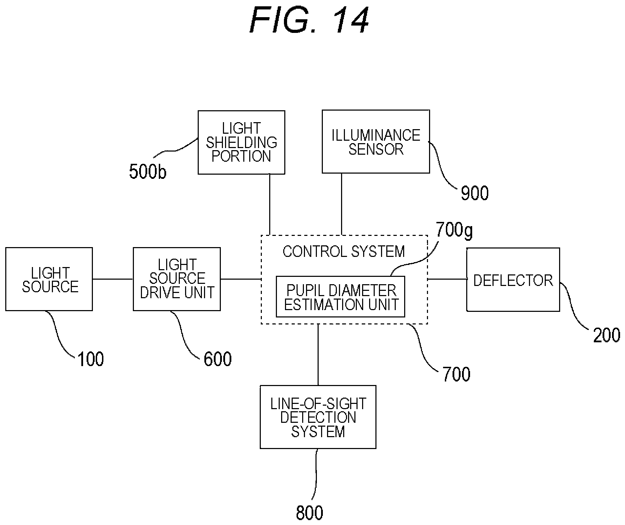

The image display device 10-2 according to Modification 2 of the first embodiment has a configuration substantially similar to that of the image display device 10 of the first embodiment except that an illuminance sensor 900 is provided (see Fig. 13) and that the control system 700 includes a pupil diameter estimation unit 700g (pupil diameter estimation system) in addition to a main control unit (see Fig. 14). The pupil diameter estimation unit 700g is implemented by, for example, a CPU together with the main control unit.

As an example, the illuminance sensor 900 is provided on the surface of the light guide plate 500e on the eyeball 1 side. The illuminance sensor 900 detects the illuminance around the eyeball 1 and outputs the detection result to the pupil diameter estimation unit 700g.

The pupil diameter estimation unit 700g estimates the pupil diameter of the pupil 2 of the eyeball 1 on the basis of output of the illuminance sensor 900.

More specifically, in the pupil diameter estimation unit 700g, as an example, a table indicating a correspondence relationship between illuminance and pupil diameters is stored in the built-in memory in advance, and the pupil diameter corresponding to the output of the illuminance sensor 900 is output as an estimation result with reference to the table as needed. The table can be obtained by calculating an average value, a median value, and the like of pupil diameters of a plurality of persons at each illuminance in a case where the illuminance is changed in stages using, for example, a light source and a camera.

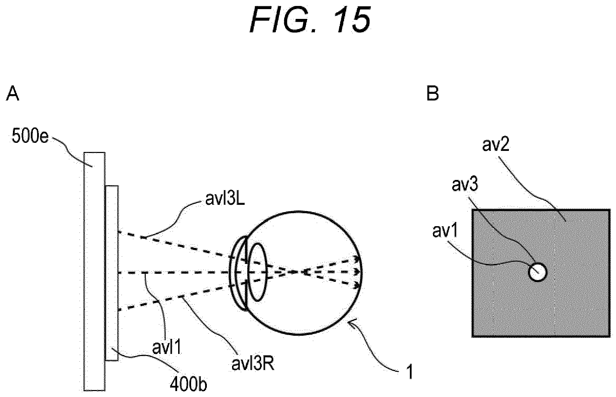

By the way, since an angle of view of third angle-of-view light avl3 that is including first angle-of-view light avl1 and caused to be incident on the pupil 2 is small in a case where the pupil diameter of the pupil 2 is small (see Fig. 15A), an image of a third angle of view av3 including a first angle of view av1 centered in the line-of-sight direction is small, and an image of a second angle of view av2 around the third angle of view av3 is dark (see Fig. 15B).

On the other hand, since the angle of view of the third angle-of-view light avl3 that is including the first angle-of-view light avl1 and caused to be incident on the pupil 2 is large in a case where the pupil diameter of the pupil 2 is large (see Fig. 16A), the image of the third angle of view av3 including the first angle of view av1 centered in the line-of-sight direction is large, and the image of the second angle of view av2 around the third angle of view av3 is bright (see Fig. 16B) .

Therefore, the first angle-of-view light avl1 and the second angle-of-view light avl2 are preferably adjusted according to the pupil diameter of the pupil 2.

Specifically, the control system 700 preferably controls the first light shielding portion 500b such that the passing range of the second angle-of-view light avl2 in the first light shielding portion 500b is larger (the light shielding range of the first angle-of-view light avl1 is smaller) as the pupil diameter of the pupil 2 is smaller, and controls the second light shielding portion 400c such that the passing range of the first angle-of-view light avl1 in the second light shielding portion 400c is smaller (the light shielding range of the second angle-of-view light avl2 is larger).

Conversely, the control system 700 preferably controls the first light shielding portion 500b such that the passing range of the second angle-of-view light avl2 in the first light shielding portion 500b is smaller (the light shielding range of the first angle-of-view light avl1 is larger) as the pupil diameter of the pupil 2 is larger, and controls the second light shielding portion 400c such that the passing range of the first angle-of-view light avl2 in the second light shielding portion 400c is larger (the light shielding range of the second angle-of-view light avl2 is smaller).

In this case, since the first and second angle-of-view light avl1, avl2 according to the pupil diameter is caused to be incident on the pupil 2 of the user, the user can be caused to visually recognize the image of the first angle of view av1 and the image of the second angle of view av2 having a size according to the pupil diameter integrally. As a result, the visibility of the image having the first angle of view av1 and the image having the second angle of view av2 can be improved.

The image light generation system 150 adjusts the size of the first angle of view and/or the second angle of view on the basis of an estimation result of the pupil diameter estimation unit 700g.

### [Image Display Processing 3]

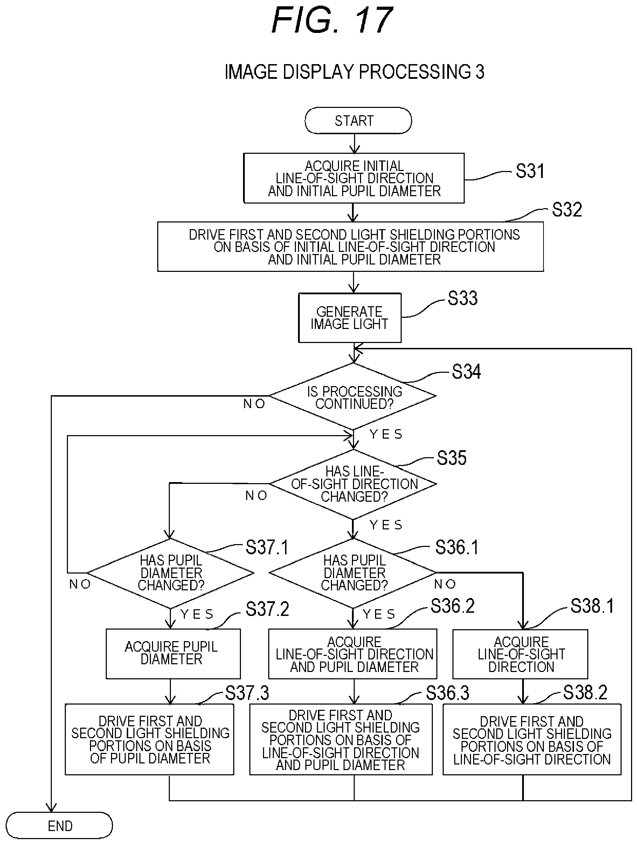

Hereinafter, image display processing 3 performed using the image display device 10-2 will be described with reference to a flowchart of Fig. 17. As an example, the image display processing 3 is started in a case where a power switch of the image display device 10-2 is turned on.

In first step S31, the main control unit of the control system 700 acquires an initial line-of-sight direction and an initial pupil diameter. Specifically, the main control unit acquires the initial line-of-sight direction of the user from the line-of-sight detection system 800 and acquires the initial pupil diameter of the user from the pupil diameter estimation unit 700g.

In next step S32, the main control unit of the control system 700 drives the first and second light shielding portions 500b, 400c on the basis of the initial line-of-sight direction and the initial pupil diameter.

Specifically, the main control unit of the control system 700 controls the first light shielding portion 500b such that first angle-of-view light avl1 that forms a first angle of view centered in the initial line-of-sight direction of second image light il2 caused to be incident on the first light shielding portion 500b is shielded with a size corresponding to the initial pupil diameter (such that the light shielding range is smaller as the initial pupil diameter is smaller), and second angle-of-view light avl2 that forms a second angle of view that is an angle of view around the referenced first angle of view is caused to pass with a size corresponding to the initial pupil diameter (such that the passing range is larger as the initial pupil diameter is smaller) .

The main control unit of the control system 700 controls the second light shielding portion 400c such that first angle-of-view light avl1 that forms a first angle of view centered in the initial line-of-sight direction of first image light il1 caused to be incident on the second light shielding portion 400c is caused to pass with a size corresponding to the initial pupil diameter (such that the passing range is smaller as the initial pupil diameter is smaller), and controls second angle-of-view light avl2 that forms a second angle of view that is an angle of view around the referenced first angle of view with a size corresponding to the initial pupil diameter (such that the light shielding range is larger as the initial pupil diameter is smaller).

In next step S33, the main control unit of the control system 700 generates image light il. Specifically, the main control unit of the control system 700 synchronously controls the light source 100 and the deflector 200, and deflects and scans light emitted from the light source 100 by the deflector 200 and generates the image light il. As a result, the first angle-of-view light avl1 guided through the first route R1 and the second angle-of-view light avl2 guided through the second route R2 reach the retina 4 through the pupil 2 and the crystalline lens 3 of the user. With this arrangement, the user can visually recognize an image of the first angle of view and an image of the second angle of view integrally.

In next step S34, the main control unit of the control system 700 determines whether or not to continue the processing. Specifically, as an example, the main control unit of the control system 700 determines to continue the processing in a case where the power switch of the image display device 10-2 remains on, and determines not to continue the processing in a case where the power switch is turned off. In a case where the determination in step S34 is positive, the processing proceeds to step S35, and in a case where the determination is negative, the flow ends.

In step S35, the main control unit of the control system 700 determines whether or not the line-of-sight direction of the user has changed. Specifically, the main control unit of the control system 700 determines whether there is a change in the line-of-sight direction of the user by monitoring output (detection result) of the line-of-sight detection system 800. In a case where the determination in step S35 is positive, the processing proceeds to step S36.1, and in a case where the determination is negative, the processing proceeds to step S37.1.

In step S36.1, the main control unit of the control system 700 determines whether or not the pupil diameter of the user has changed. Specifically, the main control unit of the control system 700 determines whether there is a change in the pupil diameter of the user by monitoring output (estimation result) of the pupil diameter estimation unit 700g. In a case where the determination in step S36.1 is positive, the processing proceeds to step S36.2, and in a case where the determination is negative, the processing proceeds to step S38.1.

In step S36.2, the main control unit of the control system 700 acquires the line-of-sight direction and the pupil diameter of the user. Specifically, the main control unit of the control system 700 acquires the line-of-sight direction after the change of the user from the line-of-sight detection system 800 and acquires the pupil diameter after the change of the user from the pupil diameter estimation unit 700g. In a case where step S36.2 is performed, the processing proceeds to step S36.3.

In step S36.3, the main control unit of the control system 700 drives the first and second light shielding portions 500b, 400c on the basis of the line-of-sight direction and the pupil diameter of the user.

Specifically, the main control unit of the control system 700 controls the first light shielding portion 500b such that first angle-of-view light avl1 that forms a first angle of view centered in the line-of-sight direction after the change of second image light il2 caused to be incident on the first light shielding portion 500b is shielded with a size corresponding to the pupil diameter after the change (such that the light shielding range is smaller as the pupil diameter after the change is smaller), and second angle-of-view light avl2 that forms a second angle of view that is an angle of view around the referenced first angle of view is caused to pass with a size corresponding to the pupil diameter after the change (such that the passing range is larger as the pupil diameter after the change is smaller).

The main control unit of the control system 700 controls the second light shielding portion 400c such that first angle-of-view light avl1 that forms a first angle of view centered in the line-of-sight direction after the change of first image light il1 caused to be incident on the second light shielding portion 400c is caused to pass with a size corresponding to the pupil diameter after the change (such that the passing range is smaller as the pupil diameter after the change is smaller), and second angle-of-view light avl2 that forms a second angle of view that is an angle of view around the referenced first angle of view is shielded with a size corresponding to the pupil diameter after the change (such that the light shielding range is larger as the pupil diameter after the change is smaller).

In a case where step S36.3 is performed, the processing returns to step S34.

In step S37.1, the main control unit of the control system 700 determines whether or not the pupil diameter of the user has changed. Specifically, the main control unit of the control system 700 determines whether there is a change in the pupil diameter of the user by monitoring output (estimation result) of the pupil diameter estimation unit 700g. In a case where the determination in step S37.1 is positive, the processing proceeds to step S37.2, and in a case where the determination is negative, the processing returns to step S35.

In step S37.2, the main control unit of the control system 700 acquires the pupil diameter of the user. Specifically, the main control unit of the control system 700 acquires the pupil diameter of the user from the pupil diameter estimation unit 700g. In a case where step S37.2 is performed, the processing proceeds to step S37.3.

In step S37.3, the main control unit of the control system 700 drives the first and second light shielding portions 500b, 400c on the basis of the pupil diameter of the user.

Specifically, the main control unit of the control system 700 controls the first light shielding portion 500b such that first angle-of-view light avl1 that forms a first angle of view centered in the line-of-sight direction of second image light il2 caused to be incident on the first light shielding portion 500b is shielded with a size corresponding to the pupil diameter after the change (such that the light shielding range is smaller as the pupil diameter after the change is smaller), and second angle-of-view light avl2 that forms a second angle of view that is an angle of view around the referenced first angle of view is caused to pass with a size corresponding to the pupil diameter after the change (such that the passing range is larger as the pupil diameter after the change is smaller).

The main control unit of the control system 700 controls the second light shielding portion 400c such that first angle-of-view light avl1 that forms a first angle of view centered in the line-of-sight direction of first image light il1 caused to be incident on the second light shielding portion 400c is caused to pass with a size corresponding to the pupil diameter after the change (such that the passing range is smaller as the pupil diameter after the change is smaller), and second angle-of-view light avl2 that forms a second angle of view that is an angle of view around the referenced first angle of view is shielded with a size corresponding to the pupil diameter after the change (such that the light shielding range is larger as the initial pupil diameter is smaller).

In a case where step S37.3 is performed, the processing returns to step S34.

In step S38.1, the control system 700 acquires the line-of-sight direction of the user. Specifically, the control system 700 acquires the line-of-sight direction after the change of the user from the line-of-sight detection system 800. In a case where step S38.1 is performed, the processing proceeds to step S38.2.

In step S38.2, the control system 700 drives the first and second light shielding portions 500b, 400c on the basis of the line-of-sight direction of the user.

Specifically, the control system 700 controls the first light shielding portion 500b such that first angle-of-view light avl1 that forms a first angle of view centered in the line-of-sight direction after the change of second image light il2 caused to be incident on the first light shielding portion 500b is shielded with a size corresponding to the pupil diameter (such that the light shielding range is smaller as the pupil diameter is smaller), and second angle-of-view light avl2 that forms a second angle of view that is an angle of view around the referenced first angle of view is caused to pass with a size corresponding to the pupil diameter (such that the passing range is larger as the pupil diameter is smaller).

The control system 700 controls the second light shielding portion 400c such that first angle-of-view light avl1 that forms a first angle of view centered in the line-of-sight direction after the change of first image light il1 caused to be incident on the second light shielding portion 400c is caused to pass with a size corresponding to the pupil diameter (such that the passing range is smaller as the pupil diameter is smaller), and second angle-of-view light avl2 that forms a second angle of view that is an angle of view around the referenced first angle of view is shielded with a size corresponding to the pupil diameter (such that the light shielding range is larger as the pupil diameter is smaller).

In a case where step S38.2 is performed, the processing returns to step S34.

### [Effects of Image Display Device]

According to the image display device 10-2 according to Modification 2 of the first embodiment, effects similar to those of the image display device 10-1 according to Modification 1 are obtained, and first and second angle-of-view light avl1, avl2 is caused to be incident on the pupil 2 with a size corresponding to the pupil diameter of the pupil 2 of the user, so that the visibility of an image of a first angle of view av1 and an image of a second angle of view av2 can be further improved.

Note that, in Modification 2, the control system 700 estimates the pupil diameter on the basis of a detection result of the illuminance sensor 900, but instead of or in addition to this, a pupil diameter measurement result by an eye sensing device that directly measures the pupil diameter may be used.

### <5. Image Display Device According to Modification 3 of First Embodiment of Present Technology>

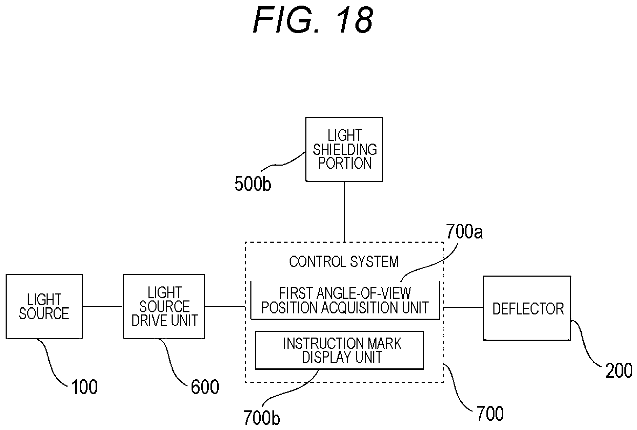

Hereinafter, an image display device according to Modification 3 of the first embodiment of the present technology will be described with reference to Fig. 18.

### [Configuration of Image Display Device]

As illustrated in Fig. 18, the image display device according to Modification 3 of the first embodiment has a configuration similar to that of the image display device 10 of the first embodiment except that the control system 700 includes a first angle-of-view position acquisition unit 700a and an instruction mark display unit 700b in addition to the main control unit, and the line-of-sight detection system 800 is not included. The first angle-of-view position acquisition unit 700a and the instruction mark display unit 700b are implemented by, for example, a CPU together with the main control unit.

The first angle-of-view position acquisition unit 700a and the instruction mark display unit 700b form a line-of-sight guidance system that guides a line-of-sight that is the direction of the eyeball 1 of the user.

### [Image Display Processing 4]

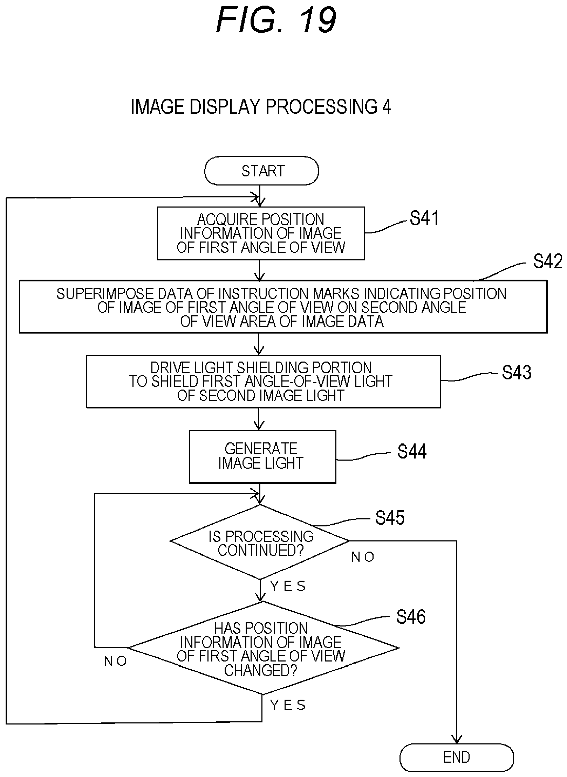

Hereinafter, image display processing 4 performed using the image display device of Modification 3 will be described with reference to a flowchart of Fig. 19. As an example, the image display processing 4 is started in a case where a power switch of the image display device of Modification 3 is turned on.

In first step S41, the first angle-of-view position acquisition unit 700a of the control system 700 acquires position information of an image of a first angle of view. Specifically, the first angle-of-view position acquisition unit 700a acquires the position information in all images of the image of the first angle of view including information to be gazed (for example, information necessary for action of the user) in input image data, and sends the acquisition result to the instruction mark display unit 700b.

In the next step S42, the instruction mark display unit 700b of the control system 700 superimposes (writes) image information of instruction marks IM (for example, arrows) indicating the position of the first angle of view on a second angle of view area (area corresponding to a second angle of view) of the image data on the basis of the acquisition result by the first angle-of-view position acquisition unit 700a.

In next step S43, the main control unit of the control system 700 drives the light shielding portion 500b to shield first angle-of-view light avl1 of second image light 112.

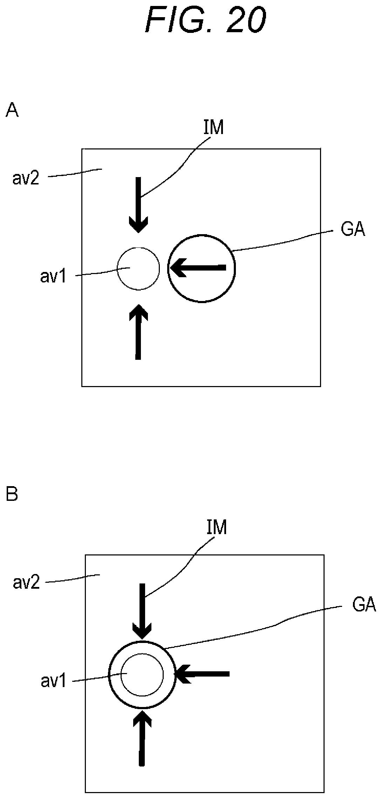

In next step S44, the main control unit of the control system 700 generates image light il. Specifically, the main control unit synchronously controls the light source 100 and the deflector 200 on the basis of the image data on which the instruction marks IM are superimposed, and deflects and scans light emitted from the light source 100 by the deflector 200 and generates the image light il. As a result, first angle-of-view light avl1 guided through the first route R1 and second angle-of-view light avl2 guided through the second route R2 and modulated according to the image information of the instruction marks IM reach the retina 4 through the pupil 2 and the crystalline lens 3 of the user. With this arrangement, the user can visually recognize an image of the first angle of view and an image of the second angle of view on which instruction marks IM are superimposed integrally. At this time, a gaze area GA centered in the line-of-sight direction of the user is guided to the position of the image of the first angle of view av1 to be gazed by the instruction marks IM (see Figs. 20A and 20B).

In next step S45, the main control unit of the control system 700 determines whether or not to continue the processing. Specifically, as an example, the control system 700 determines to continue the processing in a case where the power switch of the image display device of Modification 3 remains on, and determines not to continue the processing in a case where the power switch is turned off. In a case where the determination in step S45 is positive, the processing proceeds to step S46, and in a case where the determination is negative, the flow ends.

In step S46, the main control unit of the control system 700 determines whether or not the position information of the image of the first angle of view has changed. Specifically, the main control unit determines whether or not the position information in all the images of the image of the first angle of view including the information to be gazed (for example, information necessary for action of the user) in the input image data has changed. In a case where the determination in step S46 is positive, the processing returns to step S41, and in a case where the determination is negative, the processing returns to step S45.

### [Effects of Image Display Device]

In the image display device according to Modification 3, the line-of-sight guidance system including the first angle-of-view position acquisition unit 700a and the instruction mark display unit 700b causes the image light generation system 150 including the light source 100 and the deflector 200 to display an instruction mark IM (instruction display) indicating the position of a first angle of view av1 on an image of a second angle of view av2 formed by second angle-of-view light avl2.

With this arrangement, since a gaze area GA including the line-of-sight direction of the user can be guided to the position of an image of the first angle of view av1, the first angle of view av1 can substantially correspond to the gaze area GA even if the line-of-sight detection system 800 is not provided, and accordingly, the second angle of view av2 can substantially correspond to an angle of view around the gaze area GA.

Note that, the line-of-sight guidance system can also guide the line-of-sight by causing the light guide system 350 to include the first angle-of-view light avl1 in at least the second angle-of-view light avl2 guided through the second route R2 (by causing the first angle-of-view light avl1 to pass by the light shielding portion 500b) instead of or in addition to displaying an instruction mark IM.

### <6. Image Display Device According to Modification 4 of First Embodiment of Present Technology>

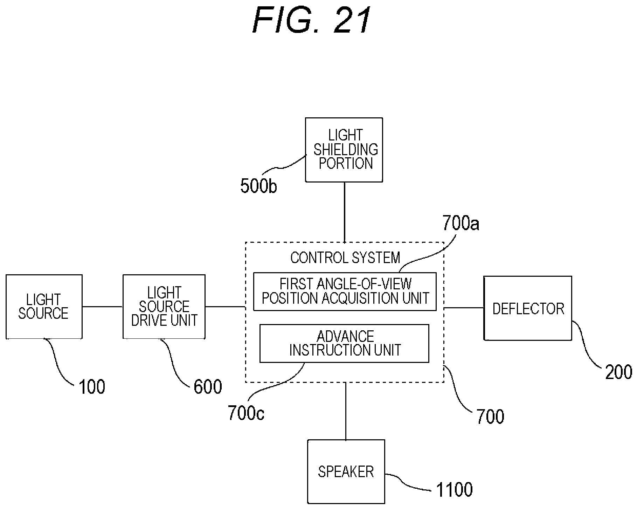

Hereinafter, an image display device according to Modification 4 of the first embodiment of the present technology will be described with reference to Fig. 21.

### [Configuration of Image Display Device]

As illustrated in Fig. 21, the image display device according to Modification 4 of the first embodiment has a configuration similar to that of the image display device 10 of the first embodiment except that the control system 700 includes the first angle-of-view position acquisition unit 700a and an advance instruction unit 700c in addition to the main control unit, and the line-of-sight detection system 800 is not included. The first angle-of-view position acquisition unit 700a and the advance instruction unit 700c are implemented by, for example, a CPU together with the main control unit.

The first angle-of-view position acquisition unit 700a and the advance instruction unit 700c form a line-of-sight guidance system that guides a line-of-sight that is the direction of the eyeball 1 of the user.

As an example, the advance instruction unit 700c is connected to a speaker 1100.

### [Image Display Processing 5]

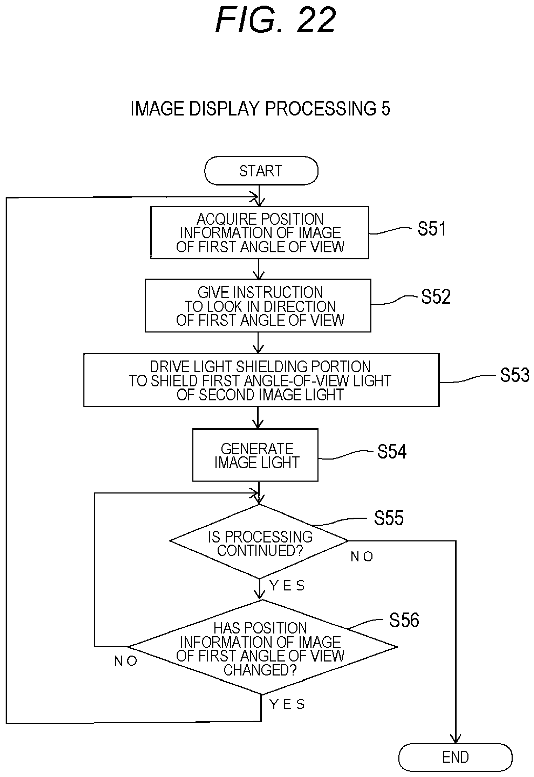

Hereinafter, image display processing 5 performed using the image display device of Modification 4 will be described with reference to a flowchart of Fig. 22. As an example, the image display processing 5 is started in a case where a power switch of the image display device of Modification 4 is turned on.

In first step S51, the first angle-of-view position acquisition unit 700a of the control system 700 acquires position information of an image of a first angle of view av1. Specifically, the first angle-of-view position acquisition unit 700a acquires the position information in all images of the image of the first angle of view av1 including information to be gazed (for example, information necessary for action of the user) in input image data, and sends the acquisition result to the advance instruction unit 700c.

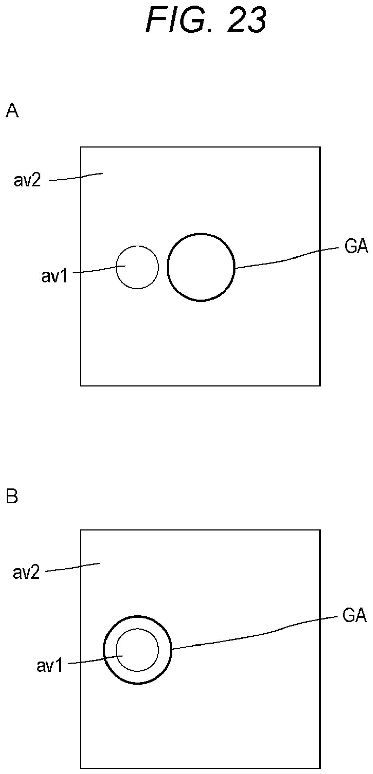

In step S52, the advance instruction unit 700c of the control system 700 instructs the user to look in the direction of the first angle of view av1 in advance. Specifically, the advance instruction unit 700c generates voice data for performing notification of the position of the image of the first angle of view av1 (for example, "Please look at the upper right." in a case where the image of the first angle of view is located at the upper right position in the entire image, "Please look directly below." in a case where the image of the first angle of view av1 is located at the position directly below in the entire image, and the like) on the basis of the acquisition result in the first angle-of-view position acquisition unit 700a, converts the referenced voice data into voice by the speaker 1100, and performs notification. With this arrangement, the gaze area GA centered in the line-of-sight direction of the user is guided in the direction of the first angle of view av1 (see Figs. 23A and 23B).

In next step S53, the main control unit of the control system 700 drives the light shielding portion 500b to shield first angle-of-view light avl1 of second image light 112.

In next step S54, the main control unit of the control system 700 generates image light il. Specifically, the main control unit synchronously controls the light source 100 and the deflector 200 on the basis of the input image data, and deflects and scans light emitted from the light source 100 by the deflector 200 and generates the image light il. As a result, the first angle-of-view light avl1 guided through the first route R1 and the second angle-of-view light avl2 guided through the second route R2 reach the retina 4 through the pupil 2 and the crystalline lens 3 of the user. With this arrangement, the user can visually recognize an image of the first angle of view and an image of the second angle of view integrally. At this time, the gaze area GA centered in the line-of-sight direction of the user substantially corresponds to the position of the image of the first angle of view av1 to be gazed (see Fig. 23B).

In next step S55, the main control unit of the control system 700 determines whether or not to continue the processing. Specifically, as an example, the control system 700 determines to continue the processing in a case where the power switch of the image display device of Modification 4 remains on, and determines not to continue the processing in a case where the power switch is turned off. In a case where the determination in step S55 is positive, the processing proceeds to step S56, and in a case where the determination is negative, the flow ends.

In step S56, the main control unit of the control system 700 determines whether or not the position information of the image of the first angle of view av1 has changed. Specifically, the main control unit determines whether or not the position information in all the images of the image of the first angle of view to be gazed in the image data has changed. In a case where the determination in step S56 is positive, the processing returns to step S51, and in a case where the determination is negative, the processing returns to step S55.

### [Effects of Image Display Device]

In the image display device according to Modification 4, the line-of-sight guidance system including the first angle-of-view position acquisition unit 700a and the instruction mark display unit 700b gives an instruction to urge the user to move the line-of-sight into a first angle of view in advance. With this arrangement, since a gaze area GA including the line-of-sight direction of the user can be guided to the position of an image of the first angle of view av1, the first angle of view av1 can substantially correspond to the gaze area GA even if the line-of-sight detection system 800 is not provided, and accordingly, the second angle of view av2 can substantially correspond to an angle of view around the gaze area GA.

Note that, the line-of-sight guidance system can also guide the line-of-sight by causing the light guide system 350 to include first angle-of-view light avl1 in at least second angle-of-view light avl2 guided through the second route R2 (by causing the first angle-of-view light avl1 to pass by the first light shielding portion 500b) instead of or in addition to giving an instruction to urge movement of the line-of-sight.

### <7. Image Display Device According to Modification 5 of First Embodiment of Present Technology>

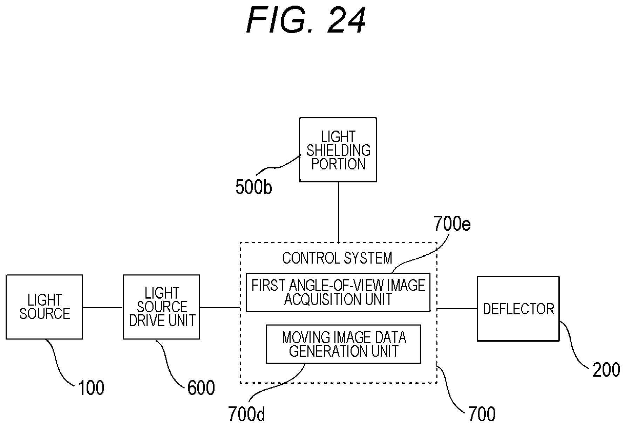

Hereinafter, an image display device according to Modification 5 of the first embodiment of the present technology will be described with reference to Fig. 24.

### [Configuration of Image Display Device]

As illustrated in Fig. 24, the image display device according to Modification 5 of the first embodiment has a configuration similar to that of the image display device 10 of the first embodiment except that the control system 700 includes a first angle-of-view image acquisition unit 700e and a moving image data generation unit 700d in addition to the main control unit, and the line-of-sight detection system 800 is not included. The first angle-of-view image acquisition unit 700e and the moving image data generation unit 700d are implemented by, for example, a CPU together with the main control unit.

The first angle-of-view image acquisition unit 700e and the moving image data generation unit 700d form a line-of-sight guidance system that guides a line-of-sight that is the direction of the eyeball 1 of the user.

### [Image Display Processing 6]

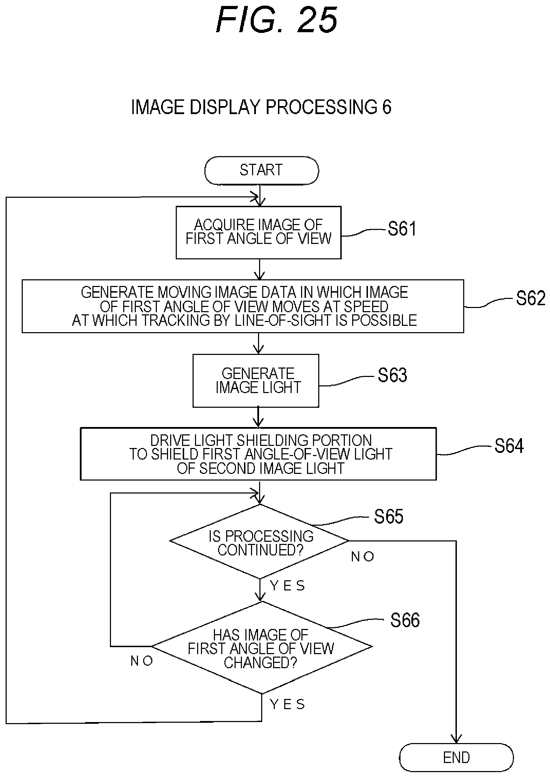

Hereinafter, image display processing 6 performed using the image display device of Modification 5 will be described with reference to a flowchart of Fig. 25. As an example, the image display processing 6 is started in a case where a power switch of the image display device of Modification 5 is turned on.

In first step S61, the first angle-of-view image acquisition unit 700e of the control system 700 acquires an image of a first angle of view av1. Specifically, the first angle-of-view image acquisition unit 700e acquires the image of the first angle of view av1 including information to be gazed (for example, information necessary for action of the user) in image data, and sends the acquisition result to the moving image data generation unit 700d.

In step S62, the moving image data generation unit 700d of the control system 700 generates a moving image in which the image of the first angle of view av1 moves at speed at which tracking by the line-of-sight is possible (for example, 30°/sec or less). Specifically, the moving image data generation unit 700d generates a plurality of frame images included in the moving image of the first angle of view av1 from the input image data.

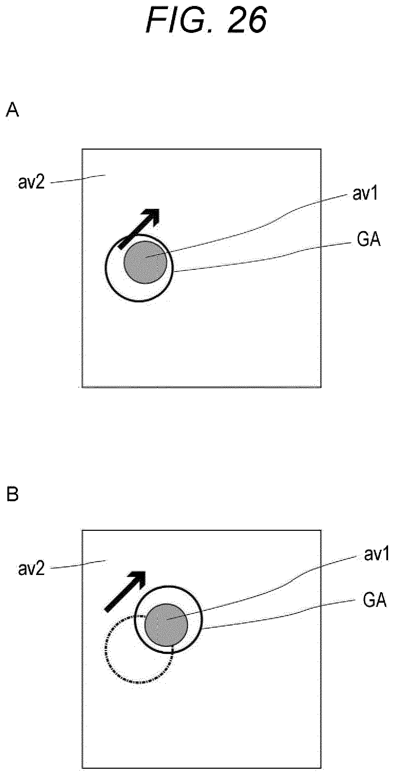

In next step S63, the main control unit of the control system 700 generates image light il. Specifically, the main control unit synchronously controls the light source 100 and the deflector 200 on the basis of the input image data, and deflects and scans light emitted from the light source 100 by the deflector 200 and generates the image light il. As a result, the first angle-of-view light avl1 guided through the first route R1 and moving at speed at which tracking by the line-of-sight is possible and second angle-of-view light avl2 guided through the second route R2 reach the retina 4 through the pupil 2 and the crystalline lens 3 of the user. With this arrangement, the user can visually recognize the image of the first angle of view moving at speed at which tracking by the line-of-sight is possible and an image of a second angle of view integrally. At this time, the gaze area GA centered in the line-of-sight direction of the user is guided such that the image of the first angle of view is tracked (see Figs. 26A and 26B) .

In next step S64, the main control unit of the control system 700 drives the light shielding portion 500b to shield the first angle-of-view light avl1 of the second image light 112. Specifically, the main control unit controls the light shielding portion 500b to shield light tracking the moving first angle-of-view light avl1.

In next step S65, the main control unit of the control system 700 determines whether or not to continue the processing. Specifically, as an example, the control system 700 determines to continue the processing in a case where the power switch of the image display device of Modification 5 remains on, and determines not to continue the processing in a case where the power switch is turned off. In a case where the determination in step S65 is positive, the processing proceeds to step S66, and in a case where the determination is negative, the flow ends.

In step S66, the main control unit of the control system 700 determines whether or not the position information of the image of the first angle of view av1 has changed. Specifically, the main control unit determines whether or not the position information in all the images of the image of the first angle of view to be gazed in the image data has changed. In a case where the determination in step S66 is positive, the processing returns to step S61, and in a case where the determination is negative, the processing returns to step S65.

### [Effects of Image Display Device]

In the image display device according to Modification 5, the line-of-sight guidance system including the first angle-of-view image acquisition unit 700e and the moving image data generation unit 700d causes the image light generation system 150 including the light source 100 and the deflector 200 to move an image of a first angle of view formed by first angle-of-view light avl1 at speed at which tracking by the line-of-sight is possible. With this arrangement, since a gaze area GA including the line-of-sight direction of the user can be guided to the position of the image of the first angle of view av1, the first angle of view av1 can substantially correspond to the gaze area GA including the line-of-sight direction of the user even if the line-of-sight detection system 800 is not provided, and accordingly, a second angle of view av2 can substantially correspond to an angle of view around the gaze area GA.

### <8. Image Display Device According to Modification 6 of First Embodiment of Present Technology>

An image display device according to Modification 6 has a configuration similar to that of the image display device according to Modification 5 except that the line-of-sight guidance system causes the image light generation system 150 to display an instruction mark IM indicating the position of the first angle of view in an image of the second angle of view formed by the second angle-of-view light avl2 in a case where notification that the image of the first angle of view has been lost is received from the user.

More specifically, in the image display device of Modification 5, the image of the first angle of view is moved at speed at which tracking by the line-of-sight is possible, but it is assumed that the user loses the image of the first angle of view during this movement. Therefore, in the image display device of Modification 6, an instruction mark IM is displayed similarly to the image display device of Modification 3, for example, using reception of notification from the user (for example, motion of the user himself/herself, input of an operation signal via an operation unit, or the like) that the image of the first angle of view has been lost as a trigger. With this arrangement, the line-of-sight of the user can be guided to the position of the image of the first angle of view.

### <9. Image Display Device According to Modification 7 of First Embodiment of Present Technology>

An image display device according to Modification 7 has a configuration similar to that of the image display device according to Modification 5 except that the line-of-sight guidance system gives an instruction to urge the user to move the line-of-sight into a first angle of view in a case where notification that an image of the first angle of view has been lost is received from the user.

More specifically, in the image display device of Modification 5, the image of the first angle of view is moved at speed at which tracking by the line-of-sight is possible, but it is assumed that the user loses the image of the first angle of view during this movement. Therefore, in the image display device of Modification 7, the user is notified by voice, for example, and caused to look in the direction of the first angle of view similarly to the image display device of Modification 4, for example, using reception of notification from the user (for example, motion of the user himself/herself, input of an operation signal via an operation unit, or the like) that the image of the first angle of view has been lost as a trigger. With this arrangement, the line-of-sight of the user can be guided to the position of the image of the first angle of view.

### <10. Image Display Device According to Modification 8 of First Embodiment of Present Technology>

An image display device according to Modification 8 has a configuration similar to that of the image display device according to Modification 5 except that the line-of-sight guidance system causes the light guide system 350 to include first angle-of-view light in at least second angle-of-view light guided through the second route in a case where notification that an image of a first angle of view has been lost is received from the user.

More specifically, in the image display device of Modification 5, the image of the first angle of view is moved at speed at which tracking by the line-of-sight is possible, but it is assumed that the user loses the image of the first angle of view during this movement. Therefore, the user can be caused to recognize the image of the first angle of view and the line-of-sight of the user can be guided to the position of the image of the first angle of view by the first angle-of-view light that is not originally guided through the second route being intentionally guided by the control of the light shielding portion 500b, for example, using reception of notification from the user (for example, motion of the user himself/herself, input of an operation signal via an operation unit, or the like) that the image of the first angle of view has been lost as a trigger.

### <11. Image Display Device According to Second Embodiment of Present Technology>

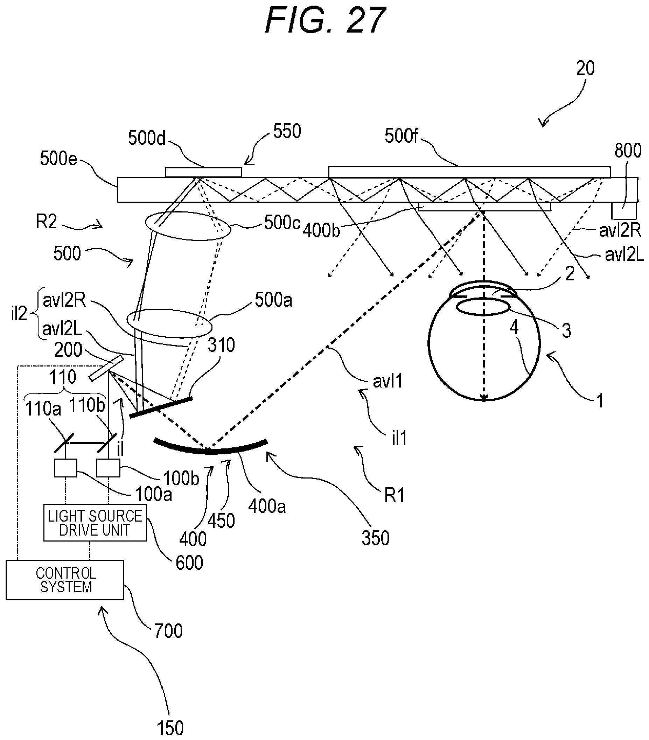

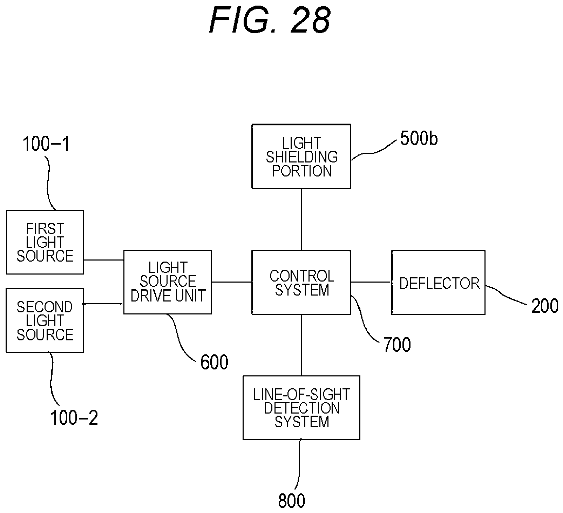

Hereinafter, an image display device 20 according to a second embodiment will be described with reference to Figs. 27 and 28.

The image display device 20 of the second embodiment has a configuration substantially similar to that of the image display device 10 of the first embodiment except that configurations of an image light generation system 150 and a relay optical system 550 are different and an incident optical system 310 is provided instead of the branching optical system 300.

In the image display device 20, as illustrated in Fig. 27, the image light generation system 150 generates image light il with the image light il divided into first angle-of-view light avl1 and second angle-of-view light avl2.

More specifically, the image light generation system 150 includes a plurality of (for example, two) light sources including first and second light sources 100a, 100b, a deflector 200 that deflects and scans incident light, a pre-deflector optical system 110 that causes light from the plurality of light sources to be incident on the deflector 200 through the same incident optical path, and a control system 700 that controls the plurality of light sources and the deflector 200.

The first and second light sources 100a, 100b are controlled by the control system 700 via a light source drive unit 600 (see Fig. 28).

The polarization directions of the first and second light sources 100a, 100b are orthogonal to each other. That is, the first and second light sources 100a, 100b emit linearly polarized light having polarization directions orthogonal to each other. The linearly polarized light emitted from the first light source 100a is referred to as "first linearly polarized light", and the linearly polarized light emitted from the second light source 100b is referred to as "second linearly polarized light".

The first and second light sources 100a, 100b are driven at different timings as described below.

As an example, the pre-deflector optical system 110 includes a first mirror 110a arranged on the optical path of the first linearly polarized light emitted from the first light source 100a, and a second mirror 110b that is provided at the intersection of the optical path of the first linearly polarized light reflected by the first mirror 110a and the optical path of the second linearly polarized light emitted from the second light source 100b and combines the optical paths of the first and second linearly polarized light. The first and second linearly polarized light reflected by the second mirror 110b is caused to be incident on the deflector 200 through the same incident optical path.

The control system 700 generates first angle-of-view light avl1 by driving at least the first light source 100a of the plurality of light sources to emit the first linearly polarized light in a case where the deflector 200 performs deflecting and scanning within a first angle of view, and generates second angle-of-view light avl2 by driving at least the second light source 100b of the plurality of light sources to emit the second linearly polarized light in a case where the deflector 200 performs deflecting and scanning within a second angle of view.

The light guide system 350 includes a first optical system 400 that guides incident light to an eyeball 1, a second optical system 500 that guides incident light to the eyeball 1, and an incident optical system 310 that causes the first angle-of-view light avl1 to be incident on the first optical system 400 and causes the second angle-of-view light avl2 to be incident on the second optical system 500.

The first optical system 400 includes a relay optical system 450 that receives the first angle-of-view light avl1, and a diffractive optical element 400b that diffracts the first angle-of-view light avl1 through the relay optical system 450 toward the eyeball 1.

In image display device 20, the relay optical system 550 does not include a light shielding portion 500b.

The second optical system 500 includes the relay optical system 550 that receives the second angle-of-view light avl2, a light guide plate 500e that guides the second angle-of-view light avl2 through the relay optical system 550, and a diffractive optical element 500f that diffracts the second angle-of-view light avl2 guided through the light guide plate 500e toward the eyeball 1.

The incident optical system 310 includes a polarization beam splitter. The polarization beam splitter transmits first image light il1 including the first angle-of-view light avl1 formed by the first linearly polarized light deflected by the deflector 200, and reflects second image light 112 including second angle-of-view light avl2L, avl2R formed by the second linearly polarized light deflected by the deflector 200. Note that a layout can be also adopted in which the first angle-of-view light avl1 is reflected by the polarization beam splitter and the second angle-of-view light avl2 is transmitted.

The first angle-of-view light avl1 through the polarization beam splitter is guided by the relay optical system 450 and diffracted toward the eyeball 1 by the diffractive optical element 400b.

The second angle-of-view light avl2 through the polarization beam splitter is caused to be incident on the light guide plate 500e through the relay optical system 550, is propagated through the light guide plate 500e while being totally reflected, and is condensed on a plurality of focal points in the vicinity of the eyeball 1 by the diffractive optical element 500f.

### [Image Display Processing 9]

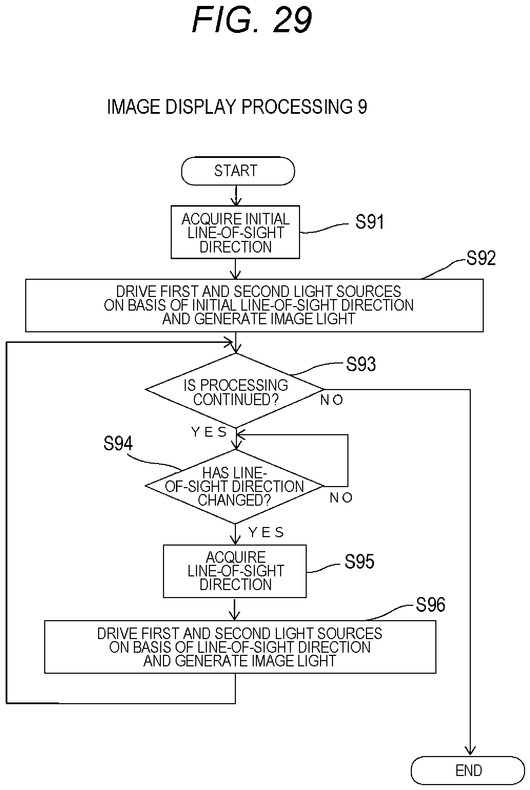

Hereinafter, image display processing 9 performed using the image display device 20 of the second embodiment will be described with reference to a flowchart of Fig. 29. As an example, the image display processing 9 is started in a case where a power switch of the image display device 20 is turned on.

In first step S91, the control system 700 acquires an initial line-of-sight direction. Specifically, the control system 700 acquires the initial line-of-sight direction of the user from the line-of-sight detection system 800.

In next step S92, the control system 700 drives the first and second light sources 100a, 100b on the basis of the initial line-of-sight direction and generates image light il. Specifically, the control system 700 generates first angle-of-view light avl1 by driving the first light source 100a to emit first linearly polarized light in a case where the deflector 200 performs deflecting and scanning within a first angle of view centered in the initial line-of-sight direction, and generates second angle-of-view light avl2 by driving the second light source 100b to emit second linearly polarized light in a case where the deflector 200 performs deflecting and scanning within a second angle of view around the referenced first angle of view. As a result, the first angle-of-view light avl1 guided through the first route R1 and the second angle-of-view light avl2 guided through the second route R2 reach the retina 4 through the pupil 2 and the crystalline lens 3 of the user. With this arrangement, the user can visually recognize an image of the first angle of view and an image of the second angle of view integrally.

In next step S93, the control system 700 determines whether or not to continue the processing. Specifically, as an example, the control system 700 determines to continue the processing in a case where the power switch of the image display device 20 remains on, and determines not to continue the processing in a case where the power switch is turned off. In a case where the determination in step S93 is positive, the processing proceeds to step S94, and in a case where the determination is negative, the flow ends.

In step S94, the control system 700 determines whether or not the line-of-sight direction of the user has changed. Specifically, the control system 700 determines whether there is a change in the line-of-sight direction of the user by monitoring output (detection result) of the line-of-sight detection system 800. In a case where the determination in step S94 is positive, the processing proceeds to step S95, and in a case where the determination is negative, the same determination is performed again (that is, the standby state is set).

In step S95, the control system 700 acquires the line-of-sight direction of the user. Specifically, the control system 700 acquires the line-of-sight direction after the change from the line-of-sight detection system 800.

In next step S96, the control system 700 drives the first and second light sources 100a, 100b on the basis of the line-of-sight direction and generates image light il. Specifically, the control system 700 generates first angle-of-view light avl1 by driving the first light source 100a to emit first linearly polarized light in a case where the deflector 200 performs deflecting and scanning within a first angle of view centered in the line-of-sight direction after the change, and generates second angle-of-view light avl2 by driving the second light source 100b to emit second linearly polarized light in a case where the deflector 200 performs deflecting and scanning within a second angle of view around the referenced first angle of view. As a result, the first angle-of-view light avl1 guided through the first route R1 and the second angle-of-view light avl2 guided through the second route R2 reach the retina 4 through the pupil 2 and the crystalline lens 3 of the user. With this arrangement, the user can visually recognize an image of the first angle of view and an image of the second angle of view integrally. In a case where step S96 is performed, the processing returns to step S93.

### [Effects of Image Display Device]

According to the image display device 20 of the second embodiment, the effects similar to those of the image display device 10 of the first embodiment are obtained.

In the image display device 20 of the second embodiment, since the incident optical system 310 further splits image light il into first image light il1 including first angle-of-view light avl1 and second image light 112 including second angle-of-view light avl2 by the polarization beam splitter, the first image light il1 can be caused to be incident on the first optical system 400 without a light amount loss, and the second image light il2 can be caused to be incident on the second optical system 500 without a light amount loss.

That is, according to the image display device 20, the light use efficiency can be improved.

### 12. <Modifications of Present Technology>

The configuration of the image display device of each embodiment and each modification of the present technology described above can be appropriately changed.

For example, in the image display device 20 of the second embodiment, line-of-sight guidance may be performed by a line-of-sight guidance system of any image display device of Modification 3 to 8 of the first embodiment being provided without the line-of-sight detection system 800 provided.

For example, in the image display device of each embodiment and each modification, line-of-sight guidance to a first angle of view may be performed as necessary by shielding of first angle-of-view light avl1 and canceling of the shielding by the first light shielding portion 500b being performed in time series.

For example, in the image display device of each embodiment and each modification, line-of-sight guidance to a first angle of view may be performed as necessary by shielding of second angle-of-view light avl2 and canceling of the shielding by the second light shielding portion 400c being performed in time series. Note that the first angle-of-view light avl1 is emphasized by shielding of the second angle-of-view light avl2 being performed by the second light shielding portion 400c, so that a line-of-sight guidance effect to the first angle of view can Be obtained.

The image display device of each embodiment and each modification described above may include both the line-of-sight detection system and the line-of-sight guidance system.

In the image display device of each embodiment and each modification described above, at least second angle-of-view light may be propagated in the air using, for example, a mirror, a lens, or the like without a light guide plate being arranged in the second route R2.

In the image display device of each embodiment and each modification described above, a light guide plate may be arranged in the first route R1, and at least first angle-of-view light may be propagated while being totally reflected in the light guide plate.

In each embodiment and each modification described above, the image light generation system forms an image by deflecting light from a laser light source, but instead of this, for example, a light source other than the laser light source (for example, light emitting diode, organic EL element, or the like) may be used.

At least a part of the configuration of each embodiment and each modification described above may be combined with each other within a range not contradictory.

Furthermore, the present technology can also have the following configurations.
(1) An image display device including
   an image light generation system that generates image light, and
   a light guide system that, in a case where light that forms a first angle of view of the image light is defined as first angle-of-view light and light that forms a second angle of view around the first angle of view of the image light is defined as second angle-of-view light, guides at least the first angle-of-view light of the first and second angle-of-view light to an eyeball of a user through a first route and guides at least the second angle-of-view light of the first and second angle-of-view light to the eyeball through a second route.
(2) The image display device according to (1), in which the light guide system causes at least the second angle-of-view light guided through the second route to be incident on the eyeball from a plurality of different directions.
(3) The image display device according to (1) or (2), in which the light guide system causes at least the second angle-of-view light guided through the second route to be incident on the eyeball at an angle of view wider than an angle of view in a case where the referenced second angle-of-view light is generated by the image light generation system.
(4) The image display device according to any one of (1) to (3), in which the light guide system causes at least the first angle-of-view light guided through the first route to be incident on the eyeball at an angle of view wider than an angle of view in a case where the referenced first angle-of-view light is generated by the image light generation system.
(5) The image display device according to any one of (1) to (4), in which the light guide system condenses at least the first angle-of-view light guided through the first route into the eyeball.
(6) The image display device according to any one of (1) to (5), in which the light guide system includes a branching optical system that causes the image light to branch into first image light and second image light, a first optical system that guides at least the first angle-of-view light of the first and second angle-of-view light included in the first image light to the eyeball through the first route, and a second optical system that guides at least the second angle-of-view light of the first and second angle-of-view light included in the second image light to the eyeball through the second route.
(7) The image display device according to (6), in which the second optical system includes a relay optical system including a light shielding portion that receives the second image light and shields the first angle-of-view light of the first and second angle-of-view light included in the second image light.
(8) The image display device according to (7), in which the light shielding portion can give a spatial distribution to a light shielding degree of the first angle-of-view light.
(9) The image display device according to (7) or (8), in which the light shielding portion can shield the first angle-of-view light and cancel shielding in time series.
(10) The image display device according to any one of (7) to (9), in which the light shielding portion is a mask in which a light shielding position is variable.
(11) The image display device according to any one of (7) to (9), in which the light shielding portion is a liquid crystal element.
(12) The image display device according to any one of (6) to (11), in which the branching optical system includes a beam splitter.
(13) The image display device according to (12), in which the beam splitter is a half mirror.
(14) The image display device according to any one of (7) to (13), in which the second optical system includes a light guide plate that guides the second angle-of-view light through the relay optical system, and a diffractive optical element that diffracts the second angle-of-view light guided by the light guide plate toward the eyeball.
(15) The image display device according to any one of (6) to (14), in which the first optical system includes a relay optical system that receives the first image light and emits at least the first angle-of-view light of the first and second angle-of-view light included in the first image light, and a diffractive optical element that diffracts at least the first angle-of-view light emitted from the relay optical system toward the eyeball.
(16) The image display device according to (15), in which the diffractive optical element condenses at least the first angle-of-view light on a rotation center of the eyeball.
(17) The image display device according to (15) or (16), in which the relay optical system includes a light shielding portion that shields the second angle-of-view light of the first and second angle-of-view light included in the first image light.
(18) The image display device according to (17), in which the light shielding portion can give a spatial distribution to a light shielding degree of the second angle-of-view light.
(19) The image display device according to (17) or (18), in which the light shielding portion can shield the second angle-of-view light and cancel shielding in time series.
(20) The image display device according to any one of (17) to (19), in which the light shielding portion is a mask in which a light shielding position is variable.
(21) The image display device according to any one of (17) to (19), in which the light shielding portion is a liquid crystal element.
(22) The image display device according to any one of (6) to (21), in which the image light generation system includes a light source, and a deflector that is arranged on an optical path of the image light between the light source and the branching optical system and deflects referenced image light.
(23) The image display device according to (1), in which the image light generation system generates the image light with the image light divided into the first angle-of-view light and the second angle-of-view light, and the light guide system includes a first optical system that guides incident light to the eyeball through the first route, a second optical system that guides incident light to the eyeball through the second route, and an incident optical system that causes the first angle-of-view light to be incident on the first optical system and causes the second angle-of-view light to be incident on the second optical system.
(24) The image display device according to (23), in which the image light generation system includes a plurality of light sources including first and second light sources, a deflector that deflects and scans incident light, a pre-deflector optical system that causes light from the plurality of light sources to be incident on the deflector through a same incident optical path, and a control system that controls the plurality of light sources and the deflector.
(25) The image display device according to (24), in which the control system generates the first angle-of-view light by driving at least the first light source of the plurality of light sources in a case where the deflector performs deflecting and scanning within the first angle of view, and generates the second angle-of-view light by driving at least the second light source of the plurality of light sources in a case where the deflector performs deflecting and scanning within the second angle of view.
(26) The image display device according to (24) or (25), in which polarization directions of the first and second light sources are orthogonal to each other, and the incident optical system includes a polarization beam splitter.
(27) The image display device according to any one of (23) to (26), in which the first optical system includes a relay optical system that receives the first angle-of-view light, and a diffractive optical element that diffracts the first angle-of-view light through the relay optical system toward the eyeball.
(28) The image display device according to any one of (23) to (27), in which the second optical system includes a relay optical system that receives the second angle-of-view light, a light guide plate that guides the second angle-of-view light through the relay optical system, and a diffractive optical element that diffracts the second angle-of-view light guided by the light guide plate toward the eyeball.
(29) The image display device according to any one of (1) to (28), further including a line-of-sight detection system that detects a line-of-sight that is a direction of the eyeball, in which the image light generation system sets a position of the first angle of view and/or a position of the second angle of view on the basis of a detection result of the line-of-sight detection system.
(30) The image display device according to any one of (1) to (29), further including a line-of-sight guidance system that guides a line-of-sight that is a direction of the eyeball.
(31) The image display device according to (30), in which the line-of-sight guidance system causes the image light generation system to display instruction display indicating a position of an image of the first angle of view on an image of the second angle of view formed by the second angle-of-view light.
(32) The image display device according to (30) or (31), in which the line-of-sight guidance system guides the line-of-sight by causing the light guide system to include the first angle-of-view light in the at least second angle-of-view light guided through the second route.
(33) The image display device according to any one of (30) to (32), in which the line-of-sight guidance system gives an instruction to urge the user to move the line-of-sight into the first angle of view in advance.
(34) The image display device according to any one of (30) to (33), in which the line-of-sight guidance system causes the image light generation system to move an image of the first angle of view formed by the first angle-of-view light at speed at which tracking by the line-of-sight is possible.
(35) The image display device according to (34), in which the line-of-sight guidance system causes the image light generation system to display instruction display indicating a position of the first angle of view on an image of the second angle of view formed by the second angle-of-view light in a case where notification that an image of the first angle of view has been lost is received from the user.
(36) The image display device according to (34) or (35), in which the line-of-sight guidance system gives an instruction to urge the user to move the line-of-sight into the first angle of view in a case where notification that an image of the first angle of view has been lost is received from the user.
(37) The image display device according to any one of (34) to (36), in which the line-of-sight guidance system guides the line-of-sight by causing the light guide system to include the first angle-of-view light in the at least second angle-of-view light guided through the second route in a case where notification that an image of the first angle of view has been lost is received from the user.
(38) The image display device according to any one of (1) to (37), further including a pupil diameter estimation system that estimates a pupil diameter of the eyeball, in which the image light generation system adjusts a size of the first angle of view and/or the second angle of view on the basis of an estimation result of the pupil diameter estimation system.

### REFERENCE SIGNS LIST

1 Eyeball
10, 10-1, 10-2, 20 Image display device
100 Light source
100a First light source
100b Second light source
150 Image light generation system
200 Deflector
300 Branching optical system
310 Incident optical system
350 Light guide system
400 First optical system
400b Diffractive optical element
400c Second light shielding portion (light shielding portion)
450 Relay optical system
500 Second optical system
500b First light shielding portion (light shielding portion)
500e Light guide plate
500f Diffractive optical element
700g Pupil diameter estimation unit (pupil diameter estimation system)
800 Line-of-sight detection system

## Claims

1. An image display device comprising:
an image light generation system that generates image light; and
a light guide system that, in a case where light that forms a first angle of view of the image light is defined as first angle-of-view light and light that forms a second angle of view around the first angle of view of the image light is defined as second angle-of-view light, guides at least the first angle-of-view light of the first and second angle-of-view light to an eyeball of a user through a first route and guides at least the second angle-of-view light of the first and second angle-of-view light to the eyeball through a second route.

2. The image display device according to claim 1, wherein the light guide system causes at least the second angle-of-view light guided through the second route to be incident on the eyeball from a plurality of different directions.

3. The image display device according to claim 1, wherein the light guide system causes at least the second angle-of-view light guided through the second route to be incident on the eyeball at an angle of view wider than an angle of view in a case where the referenced second angle-of-view light is generated by the image light generation system.

4. The image display device according to claim 1,
wherein the light guide system causes at least the first angle-of-view light guided through the first route to be incident on the eyeball at an angle of view wider than an angle of view in a case where the referenced first angle-of-view light is generated by the image light generation system.

5. The image display device according to claim 1, wherein the light guide system condenses at least the first angle-of-view light guided through the first route into the eyeball.

6. The image display device according to claim 1,
wherein the light guide system includes:
a branching optical system that causes the image light to branch into first image light and second image light;
a first optical system that guides at least the first angle-of-view light of the first and second angle-of-view light included in the first image light to the eyeball through the first route; and
a second optical system that guides at least the second angle-of-view light of the first and second angle-of-view light included in the second image light to the eyeball through the second route.

7. The image display device according to claim 6, wherein the second optical system includes a relay optical system including a light shielding portion that receives the second image light and shields the first angle-of-view light of the first and second angle-of-view light included in the second Image light.

8. The image display device according to claim 7, wherein the light shielding portion can give a spatial distribution to a light shielding degree of the first angle-of-view light.

9. The image display device according to claim 7, wherein the light shielding portion can shield the first angle-of-view light and cancel shielding in time series.

10. The image display device according to claim 7, wherein the light shielding portion is a mask in which a light shielding position is variable.

11. The image display device according to claim 7, wherein the light shielding portion is a liquid crystal element.

12. The image display device according to claim 6, wherein the branching optical system includes a beam splitter.

13. The image display device according to claim 12, wherein the beam splitter is a half mirror.

14. The image display device according to claim 7,
wherein the second optical system includes:
a light guide plate that guides the second angle-of-view light through the relay optical system; and
a diffractive optical element that diffracts the second angle-of-view light guided by the light guide plate toward the eyeball.

15. The image display device according to claim 6,
wherein the first optical system includes:
a relay optical system that receives the first image light and emits at least the first angle-of-view light of the first and second angle-of-view light included in the first image light; and
a diffractive optical element that diffracts at least the first angle-of-view light emitted from the relay optical system toward the eyeball.

16. The image display device according to claim 15, wherein the diffractive optical element condenses at least the first angle-of-view light on a rotation center of the eyeball.

17. The image display device according to claim 15, wherein the relay optical system includes a light shielding portion that shields the second angle-of-view light of the first and second angle-of-view light included in the first image light.

18. The image display device according to claim 17, wherein the light shielding portion can give a spatial distribution to a light shielding degree of the second angle-of-view light.

19. The image display device according to claim 17, wherein the light shielding portion can shield the second angle-of-view light and cancel shielding in time series.

20. The image display device according to claim 17, wherein the light shielding portion is a mask in which a light shielding position is variable.

21. The image display device according to claim 17, wherein the light shielding portion is a liquid crystal element.

22. The image display device according to claim 6,
wherein the image light generation system includes:
a light source; and
a deflector that is arranged on an optical path of the image light between the light source and the branching optical system and deflects referenced image light.

23. The image display device according to claim 1,
wherein the image light generation system generates the image light with the image light divided into the first angle-of-view light and the second angle-of-view light, and
the light guide system includes:
a first optical system that guides incident light to the eyeball through the first route;
a second optical system that guides incident light to the eyeball through the second route; and
an incident optical system that causes the first angle-of-view light to be incident on the first optical system and causes the second angle-of-view light to be incident on the second optical system.

24. The image display device according to claim 23,
wherein the image light generation system includes:
a plurality of light sources including first and second light sources;
a deflector that deflects and scans incident light;
a pre-deflector optical system that causes light from the plurality of light sources to be incident on the deflector through a same incident optical path; and
a control system that controls the plurality of light sources and the deflector.

25. The image display device according to claim 24, wherein the control system generates the first angle-of-view light by driving at least the first light source of the plurality of light sources in a case where the deflector performs deflecting and scanning within the first angle of view, and generates the second angle-of-view light by driving at least the second light source of the plurality of light sources in a case where the deflector performs deflecting and scanning within the second angle of view.

26. The image display device according to claim 24,
wherein polarization directions of the first and second light sources are orthogonal to each other, and
the incident optical system includes a polarization beam splitter.

27. The image display device according to claim 23,
wherein the first optical system includes:
a relay optical system that receives the first angle-of-view light; and
a diffractive optical element that diffracts the first angle-of-view light through the relay optical system toward the eyeball.

28. The image display device according to claim 23,
wherein the second optical system includes:
a relay optical system that receives the second angle-of-view light;
a light guide plate that guides the second angle-of-view light through the relay optical system; and
a diffractive optical element that diffracts the second angle-of-view light guided by the light guide plate toward the eyeball.

29. The image display device according to claim 1, further comprising
a line-of-sight detection system that detects a line-of-sight that is a direction of the eyeball,
wherein the image light generation system sets a position of the first angle of view and/or a position of the second angle of view on a basis of a detection result of the line-of-sight detection system.

30. The image display device according to claim 1, further comprising a line-of-sight guidance system that guides a line-of-sight that is a direction of the eyeball.

31. The image display device according to claim 30, wherein the line-of-sight guidance system causes the image light generation system to display instruction display indicating a position of an image of the first angle of view on an image of the second angle of view formed by the second angle-of-view light.

32. The image display device according to claim 30, wherein the line-of-sight guidance system guides the line-of-sight by causing the light guide system to include the first angle-of-view light in the at least second angle-of-view light guided through the second route.

33. The image display device according to claim 30, wherein the line-of-sight guidance system gives an instruction to urge the user to move the line-of-sight into the first angle of view in advance.

34. The image display device according to claim 30, wherein the line-of-sight guidance system causes the image light generation system to move an image of the first angle of view formed by the first angle-of-view light at speed at which tracking by the line-of-sight is possible.

35. The image display device according to claim 34, wherein the line-of-sight guidance system causes the image light generation system to display instruction display indicating a position of the first angle of view on an image of the second angle of view formed by the second angle-of-view light in a case where notification that an image of the first angle of view has been lost is received from the user.

36. The image display device according to claim 34, wherein the line-of-sight guidance system gives an instruction to urge the user to move the line-of-sight into the first angle of view in a case where notification that an image of the first angle of view has been lost is received from the user.

37. The image display device according to claim 34, wherein the line-of-sight guidance system guides the line-of-sight by causing the light guide system to include the first angle-of-view light in the at least second angle-of-view light guided through the second route in a case where notification that an image of the first angle of view has been lost is received from the user.

38. The image display device according to claim 1, further comprising
a pupil diameter estimation system that estimates a pupil diameter of the eyeball,
wherein the image light generation system adjusts a size of the first angle of view and/or the second angle of view on a basis of an estimation result of the pupil diameter estimation system.
